(19) **Europäisches Patentamt / European Patent Office / Office européen des brevets**

(11) **EP 4 686 261 A1**

(12) **EUROPEAN PATENT APPLICATION**
published in accordance with Art. 153(4) EPC

(43) Date of publication:
**28.01.2026 Bulletin 2026/05**

(21) Application number: **23928072.0**

(22) Date of filing: **23.03.2023**

(51) International Patent Classification (IPC):
***H04W 36/16*** (2009.01)

(52) Cooperative Patent Classification (CPC):
**H04B 7/18547; H04B 7/185; H04B 7/18513; H04B 7/18541; H04W 36/04; H04W 36/16; H04W 36/30; H04W 64/00; H04W 64/003**

(86) International application number:
**PCT/CN2023/083339**

(87) International publication number:
**WO 2024/192760 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Quectel Wireless Solutions Co., Ltd.**
**Shanghai 201601 (CN)**

(72) Inventors:
• LYU, Ling
**Shanghai 201601 (CN)**
• ZHAO, Zheng
**Shanghai 201601 (CN)**
• YANG, Zhongzhi
**Shanghai 201601 (CN)**

(74) Representative: **Fish & Richardson P.C.**
**Highlight Business Towers**
**Mies-van-der-Rohe-Straße 8**
**80807 München (DE)**

(54) **WIRELESS COMMUNICATION METHOD AND APPARATUS**

(57) A method and apparatus for wireless communication are provided. The method includes: receiving, by a terminal device, first information, where the first information is used to indicate continuous reference positions of a first cell in a first time period, and a coverage area of the first cell changes with movement of the satellite. In the embodiments of the present disclosure, the first information can indicate continuous reference positions of the first cell in the first time period, so that the terminal device may determine a reference position of the first cell at any time in the first time period via the first information. In this way, in a scenario where the reference position of the cell changes with the movement of the satellite, the reference position of the cell may be determined without updating the first information at a high frequency in the embodiments of the present disclosure, which is conducive to saving signaling overheads.

FIG. 6

**Description**

**TECHNICAL FIELD**

The present disclosure relates to the field of communication technology, and more specifically to a method and apparatus for wireless communication.

**BACKGROUND**

In a non-terrestrial network (NTN), the coverage area of certain cells may change with the movement of satellites, and thus, reference positions of the cells will also vary accordingly.

In certain scenarios, a terminal device may need to know an accurate reference position of a cell. For example, when the terminal device is in a radio resource control (RRC) idle state or RRC inactive state, it may need to know the accurate reference position of the cell to trigger cell selection/reselection. Therefore, in scenarios where the reference position of the cell changes with the movement of satellites, how the terminal device determines the reference position of the cell is a problem that needs to be addressed.

**SUMMARY**

The present disclosure provides a method and apparatus for wireless communication. The following describes various aspects involved in the present disclosure.

According to a first aspect, a method for wireless communication is provided, including: receiving, by a terminal device, first information, where the first information is used to indicate continuous reference positions of a first cell in a first time period, and a coverage area of the first cell changes with movement of a satellite.

According to a second aspect, a method for wireless communication is provided, including: sending, by a base station, first information, where the first information is used to indicate continuous reference positions of a first cell in a first time period, and a coverage area of the first cell changes with movement of a satellite.

According to a third aspect, an apparatus for wireless communication is provided, where the apparatus for wireless communication is a terminal device, and the apparatus for wireless communication includes: a receiving module, configured to receive first information, where the first information is used to indicate continuous reference positions of a first cell in a first time period, and a coverage area of the first cell changes with movement of a satellite.

According to a fourth aspect, an apparatus for wireless communication is provided, where the apparatus for wireless communication is a base station, and the apparatus for wireless communication includes: a sending module, configured to send first information, where the first information is used to indicate continuous reference positions of a first cell in a first time period, and a coverage area of the first cell changes with movement of a satellite.

According to a fifth aspect, an apparatus for wireless communication is provided, including a processor, a memory, and a communication interface, where the memory is configured to store one or more computer programs, and the processor is configured to invoke the computer programs in the memory to cause the apparatus for wireless communication to perform the method according to any one of the first aspect and the second aspect.

According to a sixth aspect, an embodiment of the present disclosure provides a communications system, where the system includes the apparatus for wireless communication. In another possible design, the system may further include another device that interacts with the apparatus for wireless communication in the solution provided in the embodiment of the present disclosure.

According to a seventh aspect, an embodiment of the present disclosure provides an apparatus, including a processor, configured to invoke a program from a memory to perform the method according to any one of the first aspect and the second aspect.

According to an eighth aspect, an embodiment of the present disclosure provides a computer-readable storage medium, where the computer-readable storage medium stores a computer program, and the computer program causes an apparatus for wireless communication to perform some or all of the operations in the methods in the foregoing aspects.

According to a ninth aspect, an embodiment of the present disclosure provides a computer program product, where the computer program product includes a non-transitory computer-readable storage medium storing a computer program, and the computer program is executable to cause an apparatus for wireless communication to perform some or all of the operations in the methods in the foregoing aspects. In some implementations, the computer program product may be a software installation package.

According to a tenth aspect, an embodiment of the present disclosure provides a computer program, where the computer program causes a computer to perform some or all of the operations in the methods in the foregoing aspects.

According to an eleventh aspect, an embodiment of the present disclosure provides a chip, where the chip includes a memory and a processor, and the processor invokes and runs a computer program from the memory, to implement some or all of the operations described in the methods in the foregoing aspects.

In the embodiments of the present disclosure, the first information can indicate continuous reference positions of the first cell in the first time period, so that the terminal device may determine a reference position of the first cell at any time in the first time period via the first information. In this way, in a scenario where the reference position of the cell changes with the movement of the satellite, the reference position of the cell may be determined without updating the first information at a high frequency in the embodiments of the present disclosure, which is conducive to saving signaling overheads.

## BRIEF DESCRIPTION OF THE DRAWINGS

FIG. 1A to FIG. 1C are example diagrams of a system architecture of a communication system to which an embodiment of the present disclosure can be applied.

FIG. 2 is an example diagram of a satellite network architecture to which an embodiment of the present disclosure can be applied.

FIG. 3 is another example diagram of a satellite network architecture to which an embodiment of the present disclosure can be applied.

FIG. 4 is another example diagram of a satellite network architecture to which an embodiment of the present disclosure can be applied.

FIG. 5 is a schematic diagram of an earth-moving cell scenario.

FIG. 6 is a schematic flowchart of a method for wireless communication provided in an embodiment of the present disclosure.

FIG. 7 is another schematic flowchart of a method for wireless communication provided in an embodiment of the present disclosure.

FIG. 8 is a schematic flowchart of a method for wireless communication on a network side provided in an embodiment of the present disclosure.

FIG. 9 is a schematic flowchart of a method for wireless communication on a terminal device side provided in an embodiment of the present disclosure.

FIG. 10 is a schematic diagram of a relative position of a first cell and a satellite provided in an embodiment of the present disclosure.

FIG. 11 is a schematic structural diagram of an apparatus for wireless communication provided in an embodiment of the present disclosure.

FIG. 12 is another schematic structural diagram of an apparatus for wireless communication provided in an embodiment of the present disclosure.

FIG. 13 is a schematic structural diagram of an apparatus for communication provided in an embodiment of the present disclosure.

## DETAILED DESCRIPTION OF THE EMBODIMENTS

COMMUNICATION SYSTEM ARCHITECTURE

The embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (NTN-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems, e.g., a future communication system, which may be, for example, a 6th-generation (6G) mobile communication system, or a satellite communication system, etc.

Generally, conventional communication systems support a limited number of connections and are easy to implement. However, with the development of communication technologies, the communication system may not only support conventional communication, but also support, for example, device to device (D2D) communication, machine to machine (M2M) communication, machine type communication (MTC), vehicle to vehicle (V2V) communication, vehicle to everything (V2X) communication, etc. The embodiments of the present disclosure may also be applied to these communication systems.

The communication system in the embodiments of the present disclosure may be applied to a carrier aggregation (CA) scenario, a dual connectivity (DC) scenario, or a standalone (SA) fabric scenario.

The communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a dedicated spectrum.

The embodiments of the present disclosure may be applied to the NTN system or may be applied to a terrestrial network (TN) system. As an example rather than a limitation, the NTN system includes an NR-based NTN system and an IoT-based NTN system.

The embodiments of the present disclosure describes each embodiment in combination with a network device and a terminal device, and the terminal device may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, a user apparatus, or the like.

In embodiments of the present disclosure, the terminal device may be a STATION (ST) in the WLAN, and may be a cellular phone, a cordless phone, a session initiation protocol (SIP) phone, a wireless local loop (WLL) station, a personal digital assistant (PDA) device, a handheld device having a wireless communication function, a computing device or another possessing device connected to a wireless modem, a vehicle-mounted device, a wearable device, a terminal device in a next-generation communication system such as the NR network, or a terminal device in a future evolved public land mobile network (PLMN) network.

In embodiments of the present disclosure, the terminal device may be a device that provides voice and/or data connectivity to a user, which may be used to connect people, objects, or machines, e.g., a handheld device, a vehicle-mounted device, etc., having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the terminal device may serve as a base station. For example, the terminal device may serve as a scheduling entity that provides sidelink signals between terminal devices in V2X, D2D, etc. For example, the cellular phone and the car use sidelink signals to communicate with each other. The cellular phone and the smart home device communicate with each other without relaying communication signals through the base station.

As an example rather than a limitation, in the embodiments of the present disclosure, the terminal device may also be a wearable device. The wearable device, also referred to as a wearable smart device, is a general term for wearable devices that are developed by applying wearable technology to intelligently design daily wear, such as glasses, gloves, watches, clothing, and shoes. The wearable device is a portable device that is either worn directly on the body or integrated into the user's clothing or accessories. The wearable device is not merely hardware, it also achieves powerful functionalities through software support, data interaction, and cloud interaction. Broadly speaking, the wearable smart device includes those with comprehensive functions, larger sizes, abilities to operate independently of a smartphone to achieve complete or partial functionality, such as smartwatches or smart glasses, as well as those that focus on specific application functions and require cooperation with other devices like smartphones, such as various types of smart bracelets and smart jewelry for monitoring physiological signs.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a radio access network (RAN) node (or device) that accesses the terminal device to a wireless network. The base station may broadly cover various names as follows, or may be replaced with the following names, such as a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may further refer to a communication module, a modem, or a chip disposed in the foregoing device or apparatus. The base station may also be a mobile switching center and a device that undertakes a function of the base station in D2D, V2X, M2M communication, a network side device in the 6G network, a device that undertakes a function of the base station in a future communication system, etc. The base station may support networks of the same or different access technologies. A specific technology adopted by the network device and a specific form of the device are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may be a CU or a DU, or the network device includes a CU and a DU. The gNB may also include AAU.

The network device and the terminal device may be deployed on land, whether indoor or outdoor, handheld or vehicle-mounted, or may be deployed on a water surface, or may be deployed on an aircraft, a balloon, and a satellite in the air. The scenarios in which the network device and the terminal device are located are not limited in the embodiments of the present disclosure.

As an example rather than a limitation, the network device in the embodiments of the present disclosure may have a mobility characteristic, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments of the present disclosure, the network device may be a base station disposed at a location such as land, water. etc.

In the embodiments of the present disclosure, the network device may provide services for a cell, and the terminal device communicates with the network device via a transmission resource (e.g., a frequency domain resource, or a spectrum resource) used by the cell. The cell may be a cell corresponding to the network device (e.g., a base station), and the cell may belong to a macro base station or a base station corresponding to a small cell. The small cell may include a metro cell, a micro cell, a pico cell, a femto cell, etc., and these small cells have the characteristics of a small coverage and a low transmission power, which are suitable for providing a high-rate data transmission service.

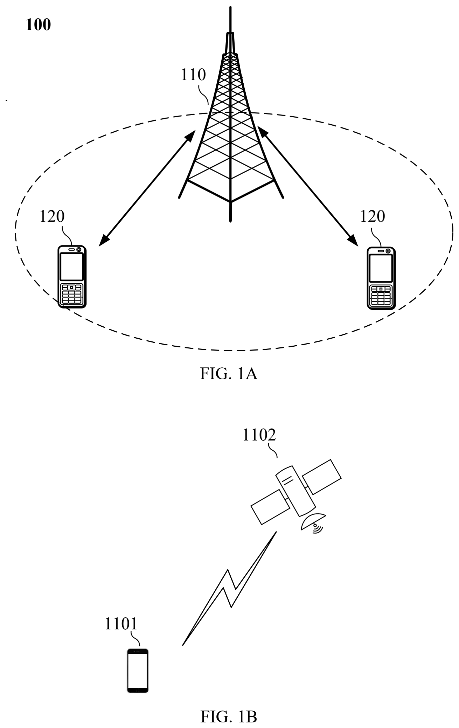

For example, FIG. 1A is a schematic architectural diagram of a communication system according to an embodiment of the present disclosure. As shown in FIG. 1A, the communication system 100 may include a network device 110, and the network device 110 may be a device that communicates with a terminal device 120 (or referred to as a communication terminal or a terminal). The network device 110 may provide communication coverage for a particular geographic area and may communicate with a terminal device located within the coverage area.

FIG. 1A exemplarily shows a network device and two terminal devices. In some embodiments of the present disclosure, the communication system 100 may include a plurality of network devices, and the coverage of each network device may include other numbers of terminal devices, which is not limited in the embodiments of the present disclosure.

For example, FIG. 1B is another schematic architectural diagram of a communication system according to an embodiment of the present disclosure. Referring to FIG. 1B, a terminal device 1101 and a satellite 1102 are included, where wireless communication is performed between the terminal device 1101 and the satellite 1102. A network formed between the terminal device 1101 and the satellite 1102 may also be referred to as NTN. In the architecture of the communication system shown in FIG. 1B, the satellite 1102 may have a function of a base station, and the terminal device 1101 may directly communicate with the satellite 1102. In the system architecture, the satellite 1102 may be referred to as a network device. In some embodiments of the present disclosure, the communication system may include a plurality of network devices 1102, and a coverage area of each network device 1102 may include another number of terminal devices, which is not limited in the embodiments of the present disclosure.

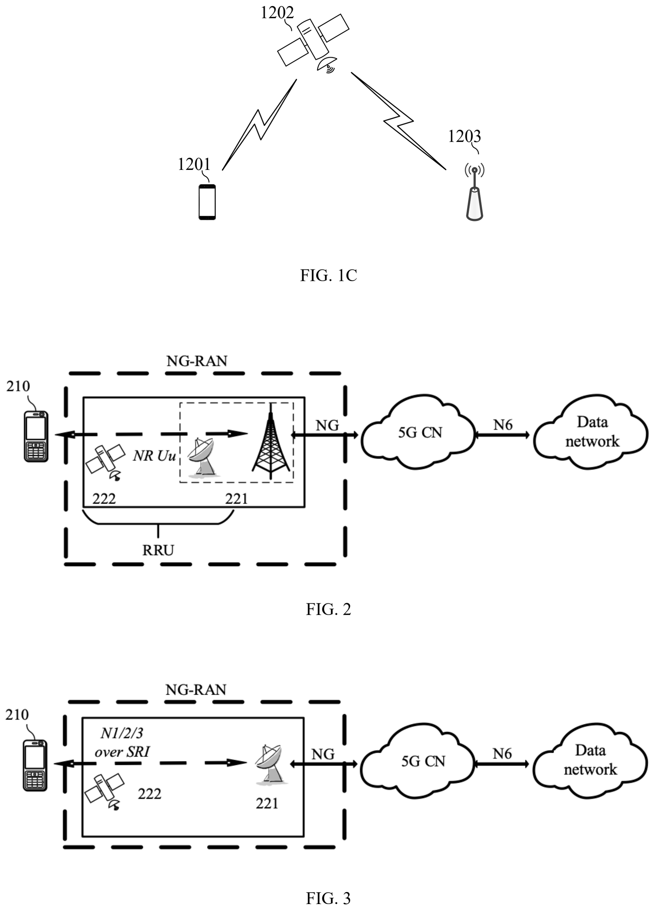

For example, FIG. 1C is another schematic architectural diagram of a communication system according to an embodiment of the present disclosure. Referring to FIG. 1C, a terminal device 1201, a satellite 1202, and a base station 1203 are included, where wireless communication is performed between the terminal device 1201 and the satellite 1202, and the satellite 1202 may communicate with the base station 1203. A network formed among the terminal device 1201, the satellite 1202, and the base station 1203 may also be referred to as NTN. In the architecture of the communication system shown in FIG. 1C, the satellite 1202 may not have the function of the base station, and the communication between the terminal device 1201 and the base station 1203 needs to be forwarded through the satellite 1202. In this system architecture, the base station 1203 may be referred to as the network device. In some embodiments of the present disclosure, the communication system may include a plurality of network devices 1203, and the coverage are of each network device 1203 may include another number of terminal devices, which is not limited in the embodiments of the present disclosure.

It should be noted that FIG. 1A to FIG. 1C are merely examples for illustrating the system to which the present disclosure is applicable, and certainly, the method shown in the embodiments of the present disclosure may also be applied to other systems, for example, a 5G communication system, an LTE communication system, or the like, which is not specifically limited in the embodiments of the present disclosure.

In the embodiments of the present disclosure, the wireless communication system shown in FIG. 1A to FIG. 1C may further include other network entities such as a mobility management entity (MME), an access and mobility management function (AMF), etc., which is not limited in the embodiments of the present disclosure.

NTN

Currently, the 3$^{rd}$ generation partnership project (3GPP) is researching NTN technology. NTN generally provides communication services to terrestrial users through satellite communication. Compared to terrestrial communication networks (e.g., terrestrial cellular networks), satellite communication has many unique advantages.

First, satellite communication is not limited by user geography. For example, typical terrestrial communication networks cannot cover oceans, high mountains, deserts, and other areas where network devices cannot be deployed. Additionally, terrestrial communication networks may not cover certain sparsely populated areas. In contrast, for satellite communication, the satellite communication may theoretically cover every corner of the Earth, as a single satellite may cover a large terrestrial area and orbit the Earth.

Second, satellite communication has significant social value. The satellite communication may provide low-cost coverage to remote mountainous areas and impoverished countries or regions, allowing people in these areas to access advanced voice communication and mobile internet technologies. From this perspective, satellite communication helps to narrow the digital divide with developed regions and promotes the development of these areas.

Furthermore, satellite communication benefits from long-distance capabilities, where the increase in communication distance does not significantly raise communication costs.

Finally, satellite communication is highly stable and is not affected by natural disasters.

Communication satellites are classified based on their orbital altitudes into low earth orbit (LEO) satellites, medium earth orbit (MEO) satellites, geostationary earth orbit (GEO) satellites, and high elliptical orbit (HEO) satellites. Currently, the main focus of research is on LEO satellites and GEO satellites.

LEO satellites typically operate at altitudes ranging from 500 km to 1500 km. Correspondingly, an orbital period of the LEO satellite is approximately 1.5 to 2 hours. For LEO satellites, a signal propagation delay for single-hop communication between users is generally less than 20 ms. The maximum visibility time of the LEO satellite is about 20 minutes. LEO satellites have advantages such as short signal propagation distances, low link loss, and low transmission power requirements for users' terminal devices.

GEO satellites have an orbital altitude of 35,786 km. An orbital period of the GEO satellite around the Earth is 24 hours. For GEO satellites, the signal propagation delay for single-hop communication between users is generally about 250 ms.

To ensure satellite coverage and enhance a system capacity of the overall satellite communication system, satellites typically employ multi-beam coverage of terrestrial areas. Therefore, a single satellite may form dozens or even hundreds of beams to cover terrestrial areas. Each beam of the satellite may cover a terrestrial area with a diameter of several tens to hundreds of kilometers.

Currently, the NTN system includes the NR-NTN system and an Internet of things (IoT)-NTN system.

SATELLITE NETWORK ARCHITECTURE

Currently, there are two types of satellites considered by 3GPP: one is a transparent payload satellite, and the other is a regenerative payload satellite. The following describes a network architecture involving the transparent payload satellite and the regenerative payload satellite with reference to FIG. 2 to FIG. 4.

In the satellite network architecture shown in FIG. 2 to FIG. 4, the satellite network architecture includes a terminal device 210, a satellite node 222, and a terrestrial receiving station 221 (referred to as "terrestrial station"). Wireless communication exists between the terminal device 210 and the satellite node 222, and the terminal device 210 may send data to the satellite node 221 through the link between the terminal device 210 and the satellite node 221. For example, data may be sent via a service link to the satellite node 221. Correspondingly, after receiving the data, the satellite node 221 may send the data to the terrestrial receiving station 222 via the link between the satellite node 221 and the terrestrial receiving station 222. For example, the data may be sent via a wireless link (such as a feeder link) to the terrestrial receiving station 221. Correspondingly, after the terrestrial receiving station 221 receives the data from the satellite node 222, it transmits the data to a core network (data network), and then processes the data through the core network, such as by exchanging data with other terminals, etc. It should be understood that the service link refers to the link between the terminal device 210 and the satellite node 222, and the feeder link refers to the link between the satellite node 222 and the terrestrial receiving station 221. In other possible implementations, the link between the terminal device and the satellite node and/or the link between the satellite node and the terrestrial receiving station may also be referred to by other terms, which is not limited in the present disclosure.

The satellite node 222 mentioned above may be classified into three types. The first type of satellite node is used only for forwarding, i.e., it has only transparent payload functionality. In some implementations, such a type of satellite node may only provide one or more of the following functions: radio frequency filtering, frequency conversion, and power amplification. For this type of satellite node, a received terminal device signal may be amplified and then sent to the terrestrial receiving station, with no processing of the terminal device signal performed at the satellite node, as shown in FIG. 2. In this case, communication between the terminal device and the satellite node is via an NR-Uu interface, communication between the satellite node and the terrestrial receiving station (e.g., including a NTN remote radio unit (RRU) and gNB) is via the NR-Uu interface, communication between the terrestrial receiving station and a 5G core network (5G CN) is via N1, N2, and N3 interfaces, and communication between the 5G CN and the data network is via an N6 interface.

The second type of satellite node has complete base station processing functionality. The satellite node serves as a base station for the terrestrial terminal device, and the communication between the satellite node and the terminal device is essentially the same as normal 5G communication, as shown in FIG. 3. In some implementations, such a type of satellite node may also provide one or more of the following functions: demodulation, decoding, routing, conversion, encoding, and modulation. In this case, communication between the terminal device and the satellite node is via the NR-Uu interface, communication between the satellite node and the terrestrial receiving station is via a satellite radio interface (SRI) that may be used to send interface messages between the satellite node and the 5G CN (e.g., N2, N3 interface messages), communication between the terrestrial receiving station and 5G CN is via the N1, N2, and N3 interfaces, and communication between the 5G CN and the data network is via the N6 interface.

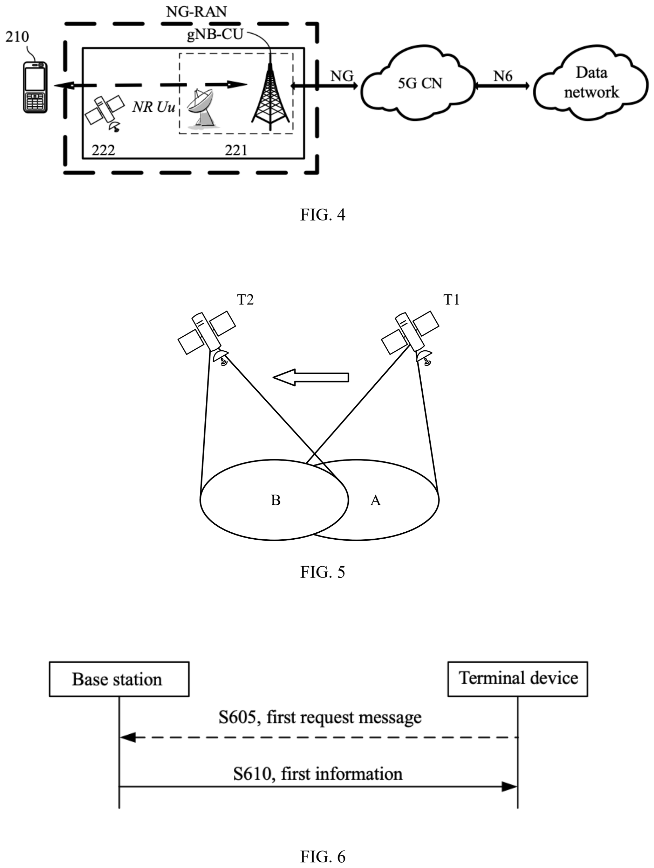

The third type of satellite node has DU processing functionality. The satellite node functions as a DU for the terrestrial terminal devices, and the communication between the satellite node and the terminal device is essentially the same as the communication between the terminal device and DU in a normal 5G terrestrial communication system, as shown in FIG. 4. In this case, communication between the terminal device and satellite node is via the NR-Uu interface, communication between the satellite node and terrestrial receiving station (e.g., including gNB-CU) is via the SRI interface that may be used to transmit an F1 interface message between the satellite and the terrestrial receiving station, communication between the terrestrial receiving station and 5G CN is via the N1/N2/N3 interfaces, and communication between the 5G CN and the data network is via the N6 interface.

In some implementations, a coverage area of the NTN cell may change as the satellite moves, causing a reference position of the cell to change accordingly. For example, the NTN cell includes an earth-moving cell, where a coverage area of the earth-moving cell changes as the satellite moves, as shown in FIG. 5. The coverage area of the satellite at time T1 is A, and the coverage area of the satellite at time T2 is B. The arrow in FIG. 5 is used to indicate a direction of the satellite's movement.

CELL RESELECTION IN NTN

Unlike traditional terrestrial mobile communication systems, satellite communication systems have characteristics such as high mobility, long propagation delays, and large cell coverage areas. As a result, traditional terrestrial mobile communication technologies are not well-suited for satellite communication scenarios. Therefore, 3GPP, in Release 17 (R17), enhanced the protocol for NTN based on the existing 5G air interface. Regarding NTN mobility enhancement, R17 primarily starts from aspects such as cell handover, cell selection/reselection, etc., to analyze potential issues and requirements when terrestrial technologies are applied to NTN, and some protocol enhancement solutions were proposed in R17, but these solutions only address part of the issues. In Release 18 (R18), further research on NTN mobility enhancement is needed, particularly in proposals related to NTN cell reselection enhancement, where the current discussion among companies is focused on NTN- TN and NTN-NTN cell reselection optimization.

Cell reselection primarily occurs in a terminal device in an RRC idle/ RRC inactive state, allowing the terminal device to switch from a current serving cell to a high-quality cell, such as the high-quality cell at a high level, a same level, or a low level. Compared to cell handover in an RRC connected state, cell reselection is mainly performed on the terminal device side, with minimal involvement from the network side.

During the cell reselection, the terminal device may need to know an exact reference position of the cell to trigger the cell reselection process. In TN, because the position of the cell is fixed, the terminal device only needs to obtain the reference position once for the TN cell. However, in NTN, reference positions of some cells may change as the satellite moves. In such scenarios, such as in the Earth-moving cell scenario, the cell moves with the satellite at high speed, causing the reference position of the cell to change as the satellite moves. In other words, the reference position of the cell may be time-varying. In this case, how the terminal device determines the reference position of the cell is an issue that needs to be solved in the scenario when the reference position of the cell changes with the satellite's movement.

As one possible implementation, the network side may directly provide the reference position of the cell to the terminal device. However, in this implementation, due to the high-speed movement of the satellite, the reference position of the cell changes frequently, requiring frequent updates of information between the network side and the terminal device, which increases communication burden on the terminal device side.

As another possible implementation, the terminal device may perform real-time calculation on the position of the satellite based on ephemeris information and combine this with a relative position of the cell and the satellite to obtain a real-time reference position of the cell. On the one hand, this solution requires the terminal device to perform high-frequency, real-time ephemeris parsing, which increases computational burden on the terminal device side. On the other hand, this solution is not suitable for scenarios where the relative position of the cell and the satellite is not fixed. Additionally, the network side has a more convenient and comprehensive understanding of information such as beam management and satellite position. In contrast, this solution assigns the task of calculating the reference position of the cell to the terminal device, which makes it difficult for the terminal device to obtain timely changes in satellite, beam, other related information on the network side, resulting in low accuracy and poor timeliness of the calculation.

To address the above issues, embodiments of the present disclosure provide a method and apparatus for wireless communication that, on the one hand, does not require frequent information updates between the network side and the terminal device side, and on the other hand, reduces the computational burden on the terminal device side. The following describes the technical solutions in the embodiments of the present disclosure in detail.

FIG. 6 is a schematic flowchart of a method for wireless communication provided in an embodiment of the present disclosure. The method shown in FIG. 6 is introduced from the perspective of the interaction between a terminal device and a base station. The terminal device and the base station may be any type of terminal device and base station mentioned above. In some embodiments, the terminal device may be in the RRC idle state or the RRC inactive state.

The method in FIG. 6 may include operation S610, in operation S610, the base station sends first information to the terminal device. The first information may be used to indicate (or, to determine) continuous reference positions of a first cell in a first time period. In other words, the first information may be used to indicate continuous reference positions of the first cell during a period of time, for example, indicating a plurality of reference positions of the first cell during a period of time.

In some embodiments, the first information may include first parameters, where the first parameters are used to determine (or, to indicate) trail information of reference positions of the first cell.

In some embodiments, the first parameters may be understood as parameters of a first model. The first model may be used to indicate the trail information of the reference positions of the first cell. In some embodiments, the first model used to indicate the trail information of the reference positions of the first cell may be understood as the first model being used to fit the trail of the reference positions of the first cell.

In some embodiments, the first information may include the first model and the parameters of the first model. That is to say, the first information may include the first model and the first parameter.

After the terminal device obtains the first model and the first parameter, it may determine the continuous reference positions of the first cell in the first time period.

In some embodiments, the sending of the first information is based on a request from the terminal device. Continuing refer to FIG. 6, the method shown in FIG. 6 may further include operation S605, in operation S605, the terminal device sends a first request message to the base station. The first request message is used to obtain the first information.

Further details regarding the first information may be found in the description below, which is not repeated here.

In some embodiments, the continuous reference positions of the first cell in the first time period may refer to the reference position of the first cell at any moment over the first time period.

It should be understood that a specific duration of the first time period is not limited in the embodiments of the present disclosure, meaning that the first time period may refer to any duration of a period of time, such as 5 seconds, 20 seconds, 1 minute, etc.

In some embodiments, the duration of the first time period may be variable. For example, the first information sent by the base station to the terminal device for the first time is used to indicate the continuous reference positions of the first cell during the first time period (e.g., 5 seconds). Subsequently, the base station sends updated first information to the terminal device, and the updated first information is used to indicate the continuous reference positions of the first cell in the first time period (e.g., 20 seconds).

The embodiments of the present disclosure do not impose specific limitations on the indication manner of the first time period. For example, the first time period may be indicated by a start time and a duration, or may be indicated by a start time and an end time, or may be indicated by an end time and a duration, etc.

In the embodiments of the present disclosure, a coverage area of the first cell changes with movement of a satellite. In some embodiments, the first cell may refer to a serving cell of the terminal device. However, the embodiments of the present disclosure are not limited to this. In some embodiments, the first cell may refer to a neighboring cell of the terminal device.

In some embodiments, the first cell refers to an NTN cell. For example, the first cell may be an earth-moving cell.

In some embodiments, the reference position of the first cell may also be referred to as a reference point of the first cell or other similar names, which is not limited in the embodiments of the present disclosure.

The embodiments of the present disclosure do not impose specific limitations on the setting of the reference position of the first cell. For example, the reference position of the first cell may refer to a central position of the first cell. However, the embodiments of the present disclosure are not limited to this, in some embodiments, the reference position of the first cell may also refer to an edge position of the first cell or any other position of the first cell.

In some embodiments, a shape of the first cell may be irregular. In such cases, when the reference position of the first cell is the central position, it may refer to a geometric center of the first cell. Additionally, when the shape of the first cell is irregular, the edge position of the first cell may correspond to multiple different edge positions. In this case, the edge position of the first cell may refer to an edge position closest to or farthest from the central position of the first cell, etc.

In some embodiments, the reference position of the first cell may be predefined or preconfigured by the protocol. In some embodiments, the reference position of the first cell may be configured by the base station. For example, the base station may configure the reference position of the first cell via higher-layer signaling or system information, etc.

In the embodiments of the present disclosure, the first information can indicate the continuous reference positions of the first cell in the first time period, allowing the terminal device to utilize the first information to determine the reference position of the first cell at any moment during the first time period. Consequently, in scenarios where the reference position of the cell changes with the movement of the satellite, compared to a solution where the network side directly provides the real-time reference position of the first cell, the embodiments of the present disclosure do not require high-frequency updates of the first information to determine the reference position of the cell, which is conducive to saving signaling overheads. Additionally, compared to a solution where the terminal device calculates the satellite position in real-time based on ephemeris information to determine the reference position of the first cell, in the embodiments of the present disclosure, the terminal device does not need to calculate the real-time satellite position to determine the reference position of the first cell, it only needs to know the first information to obtain the reference position of the first cell at any moment over a longer period, thereby reducing the computational burden on the terminal device side.

Moreover, the applicability of the embodiments of the present disclosure is stronger. On the one hand, the embodiments of the present disclosure move the calculation of the reference position of the first cell to the network side, which can better accommodate situations where the relative position between the first cell and the satellite changes due to beam direction adjustment. This is because if the network side plans to adjust the beam direction in a subsequent time period, resulting in a change in the relative position between the first cell and the satellite, the network side can timely adjust the first information based on the plan. In contrast, in the solution where the terminal device calculates the satellite position in real-time based on ephemeris information to determine the reference position of the first cell, the terminal device cannot timely know the beam direction adjustment that the network side is about to execute, thus failing to quickly calculate the reference position of the first cell after the beam direction change. On the other hand, when the network side calculates the reference position of the first cell, it does not need to consider a format of the ephemeris provided to the terminal device. Therefore, the embodiments of the present disclosure can be applicable to any ephemeris format.

The first information is introduced in detail below.

As mentioned above, in some embodiments, the first information may include the first parameters, such as the parameters of the first model. In some embodiments, when the first model is a function model (also referred to as a basis function model, basis function, etc.), the parameters of the first model may refer to coefficients of the function model.

In some embodiments, the terminal device side may pre-store the first model. In this way, after the terminal device receives the first information (the parameters of the first model), it may determine the reference position of the first cell at any moment during the first time period based on the parameters of the first model and the stored first model. That is to say, the embodiments of the present disclosure can utilize the idea of curve fitting, where the first model used for fitting is pre-stored on the terminal device side, while the network side performs trail estimation (also referred to as prediction, the term "prediction" mentioned later may also be replaced with estimation) of the reference position of the first cell, fits the predicted trail of the reference position of the first cell, and finally sends the fitting result (e.g., the first parameter) to the terminal device, enabling the terminal device to obtain the reference position of the first cell at any moment over a longer period, thus reducing the computational burden on the terminal device side.

In some embodiments, the first model may be sent by the base station to the terminal device. For example, the base station may send both the first model and the parameters of the first model to the terminal device through the first information, or the base station may send the first model and the parameters of the first model to the terminal device separately through different signaling.

In some embodiments, the first information may be estimated by the base station. In other words, the first model and/or the first parameters may be obtained through estimation (also referred to as fitting, prediction, etc.) by the base station.

In some embodiments, the first information is obtained by estimating a plurality of reference positions of the first cell in a second time period. In other words, the first model and/or the parameters of the first model may be obtained by estimating the plurality of reference positions of the first cell in the second time period. In this way, the embodiments of the present disclosure achieve time-varying calculations of the reference position of the first cell based on trail estimation, which can be applied to cell reselection in earth-moving cell scenarios, such as NTN-NTN cell reselection, NTN-TN cell reselection, etc.

It should be noted that the fitting mentioned in the embodiments of the present disclosure may be replaced with estimation, which is not limited in the embodiments of the present disclosure.

In some embodiments, the time periods indicated by the first time period and the second time period may be the same.

In some embodiments, the time periods indicated by the first time period and the second time period may be different. For example, the time period indicated by the second time period may be earlier than that indicated by the first time period. Alternatively, a starting point of the second time period may be the same as that of the first time period, but durations of the first time period and the second time period may differ. For example, the duration of the time period indicated by the second time period is shorter than the duration of the time period indicated by the first time period.

In some embodiments, the plurality of reference positions of the first cell in the second time period may refer to a plurality of discrete reference positions of the first cell in the second time period.

The embodiments of the present disclosure do not impose specific limitations on the method of obtaining the plurality of reference positions of the first cell in the second time period. Exemplarily, the plurality of reference positions of the first cell in the second time period may be obtained based on one or more of: information of a plurality of positions of the satellite in the second time period; a relative positional relationship between the first cell and the satellite; and the plurality of reference positions of the first cell in the second time period provided by the first device.

The first device mentioned in the embodiments of the present disclosure refers to any device capable of obtaining satellite position information and beam direction information. For example, the first device may refer to the satellite, or the first device may refer to a beam management module or beam management system on the network side, etc.

As one implementation, the plurality of reference positions of the first cell in the second time period may be obtained based on information of the plurality of positions of the satellite in the second time period and the relative position relationship between the first cell and the satellite. Specifically, the base station may obtain the information of the plurality of positions of the satellite in the second time period, as well as the relative position relationship between the satellite and the first cell at each of those positions. Based on this, the base station is able to calculate the plurality of reference positions of the first cell in the second time period.

As another implementation, the plurality of reference positions of the first cell in the second time period may be directly provided to the base station by the first device (e.g., the satellite, beam management module, etc.).

In some embodiments, a fitting result of the reference position of the first cell in the present disclosure may be a time function of coordinates of the reference position of the first cell. Exemplarily, the fitting result of the reference position of the first cell may be expressed as:

$$X(t) = a_1 f_1(t) + a_2 f_2(t) + \cdots$$

$$Y(t) = b_1 f_1(t) + b_2 f_2(t) + \cdots$$

$$Z(t) = c_1 f_1(t) + c_2 f_2(t) + \cdots$$

In some embodiments, the fitting result of the reference position of the first cell may be understood as the first model mentioned above, where $a_1$, $a_2$ ...... $b_1$, $b_2$ ... ... $c_1$, $c_2$ ... ... may be understood as the parameters of the first model. That is, in some embodiments, the first information may include values of $a_1$, $a_2$ ...... $b_1$, $b_2$ ... ... $c_1$, $c_2$ ... ....

The embodiments of the present disclosure do not specifically limit the method of fitting the plurality of reference positions of the first cell in the second time period to obtain the first information (such as the parameters of the first model). Exemplarily, the embodiments of the present disclosure may utilize the Chebyshev polynomial fitting algorithm to fit the plurality of reference positions of the first cell in the second time period to obtain the first information.

In some embodiments, different orders of the Chebyshev polynomial fitting algorithm may be utilized to fit the plurality of reference positions of the first cell in the second time period based on specific circumstances. Fitting curves corresponding to the different orders of the Chebyshev polynomial fitting algorithm vary, and an appropriate order of the Chebyshev polynomial fitting algorithm may be selected for fitting to obtain a more accurate fitting result (e.g., the first information).

In some embodiments, the order of the Chebyshev polynomial fitting algorithm may be determined by the operator based on different working scenarios.

A brief introduction to the Chebyshev polynomial fitting algorithm is provided below. The expression for an $n^{th}$ order Chebyshev polynomial is as follows:

$$\left.\begin{array}{l} T_0(\tau) = 1 \\ T_1(\tau) = \tau \\ T_n(\tau) = 2\tau T_{n-1}(\tau) - T_{n-2}(\tau) \\ \tau \in [-1,1], n \geqslant 2 \end{array}\right\} \qquad (1)$$

In some embodiments, when utilizing the Chebyshev polynomial for fitting, the fitting objective is real-time coordinates of the reference position of the first cell, which may specifically refer to formula (2):

$$\left.\begin{array}{l} X(t) = \sum_{i=0}^{n} C_{X_i} T_i(\tau) \\ Y(t) = \sum_{i=0}^{n} C_{Y_i} T_i(\tau) \\ Z(t) = \sum_{i=0}^{n} C_{Z_i} T_i(\tau) \end{array}\right\} \qquad (2)$$

where n is the order of the Chebyshev polynomial, $C_{X_i}$, $C_{Y_i}$, $C_{Z_i}$ are Chebyshev polynomial coefficients for X, Y, and Z coordinate components, respectively, and T is a Chebyshev polynomial matrix. Specifically, expressions for the Chebyshev polynomial matrix T and a coefficient matrix C are as formulas (3):

$$T = \begin{pmatrix} T_0(\tau_0) & T_1(\tau_0) & \cdots & T_n(\tau_0) \\ T_0(\tau_1) & T_1(\tau_1) & \cdots & T_n(\tau_1) \\ \vdots & \vdots & \vdots & \vdots \\ T_0(\tau_m) & T_1(\tau_m) & \cdots & T_n(\tau_m) \end{pmatrix}, C = \begin{pmatrix} C_{X_0} \\ C_{X_1} \\ \vdots \\ C_{X_n} \end{pmatrix} \qquad (3)$$

where m is a number of the plurality of reference positions of the first cell utilized in the second time period for fitting.
Thus, a value of the matrix C may be derived from the following formula (4), meaning that the process of fitting using the Chebyshev polynomial fitting algorithm only involves solving the following matrix equation.

$$T^{\mathrm{T}} T C = T^{\mathrm{T}} x \quad (4)$$

The embodiments of the present disclosure do not specifically limit the method for solving this matrix equation. Exemplarily, an inverse matrix may be directly computed to obtain C as shown in formula (5). Alternatively, other algorithms such as LU decomposition may also be used to solve this matrix equation, further reducing the time required to solve for C.

$$C = (T^{\mathrm{T}} T)^{-1} T^{\mathrm{T}} x \qquad (5)$$

Utilizing the Chebyshev polynomial fitting algorithm for fitting is relatively straightforward and has low computational consumption, thereby reducing the computational burden on the network side for calculating the reference position of the first cell.
Of course, in some embodiments, the embodiments of the present disclosure may also utilize other fitting algorithms to fit the plurality of reference positions of the first cell in the second time period, for example, using Lagrange polynomial interpolation to fit the plurality of reference positions of the first cell in the second time period, etc.
In some embodiments, the selection of the method for fitting of the plurality of reference positions of the first cell in the second time period may be based on one or both of the satellite's orbit and the ephemeris format corresponding to the satellite. In other words, the fitting method may be selected based on one or both of the above factors. For example, the selection of the Chebyshev polynomial or the Lagrange polynomial interpolation for fitting may be based on the satellite's orbit, or the selection of a specific order of the Chebyshev polynomial for fitting may be based on the satellite's orbit.
In the embodiments of the present disclosure, different satellites and accuracy requirements may result in different selected first models and algorithms. For example, different orders of Chebyshev polynomials may be selected to fit the reference position of the first cell, which is not limited in the embodiments of the present disclosure.
In some embodiments, the updating of the first information is triggered based on a condition. For example, in the case where the base station sends the first information to the terminal device, the base station may trigger the updating of the first information based on the condition and resend the updated first information to the terminal device.
The condition for triggering the updating of the first information may include various factors, which is not limited in the embodiments of the present disclosure. Exemplarily, the condition for triggering the updating of the first information may include one or more of: updating of the ephemeris; a relative position relationship between the first cell and the satellite changing; and the reference position of the first cell changing.

In some embodiments, the updating of the ephemeris may update the accuracy of the satellite's position, thereby affecting the accuracy of the first information. Therefore, triggering the updating of the first information when the ephemeris is updated ensures the accuracy of the satellite's position and thus guarantees the accuracy of the first information.

In some embodiments, the relative position relationship between the first cell and the satellite changing may refer to the existence of a new relative position relationship between the first cell and the satellite. In some embodiments, the relative position relationship between the first cell and the satellite changing may refer to a modification of a given relative position relationship between the first cell and the satellite.

As an example, in a case where the reference position of the first cell is predicted on the network side based on the information of the plurality of positions of the satellite and the relative position relationship between the first cell and the satellite, if the relative position relationship between the first cell and the satellite is not fixed, the condition for triggering the updating of the first information may include: updating of the ephemeris, and/or the relative position relationship between the first cell and the satellite changing.

As another example, in the case where the reference position of the first cell is predicted on the network side based on the information of the plurality of positions of the satellite and the relative position relationship between the first cell and the satellite, if the relative position relationship between the first cell and the satellite is fixed, the condition for triggering the updating of the first information may include updating of the ephemeris.

As yet another example, in a case where the reference position of the first cell is provided by a first device (e.g., a satellite from the operator, a beam management module, etc.), the condition for triggering the updating of the first information may include the reference position of the first cell changing. In some embodiments, the reference position of the first cell changing may refer to the first device providing a new reference position of the first cell.

In some embodiments, the first information may be carried in system information, such as a master information block (MIB) or a system information block (SIB). The embodiments of the present disclosure do not specifically limit the type of SIB that carries the first information. Exemplarily, the first information may be carried in SIB 19.

As one implementation, SIB 19 may include a field (e.g., cellReferenceTrail field), and the field contains the first information, such as the parameters of the first model. In this way, the terminal device is able to determine the continuous reference positions of the first cell in the first time period by obtaining this field from SIB 19.

In some embodiments, when the first information is carried in system information (e.g., SIB 19), the field carrying the first information may be stored in the system information as a plurality of single-precision floating-point numbers, with the following format.

```
-- ASN1START
-- TAG-NTN-CONFIG-START
NTN-Config-r17 ::=          SEQUENCE {
    cellReferenceTrail          CellReferenceTrail

    ...
}

cellReferenceTrail ::=        SEQUENCE {
    a_1                            FLOAT,
    a_2                            FLOAT,

    ...
    b_1                            FLOAT,
    b_2                            FLOAT,
    ...
    c_1                            FLOAT,
    c_2                            FLOAT,
    ...
}
...
        -- TAG-NTN-CONFIG-STOP

    -- ASN1STOP
```

However, the embodiments of the present disclosure are not limited to this. In some embodiments, based on the satellite orbit characteristics, the field carrying the first information may be set in the form of fixed-point numbers or integers with a specific step size. In other words, the field carrying the first information may also be stored in system information in the form of fixed-point numbers or integers with a specific step size, to save space and improve performance.

In some embodiments, in addition to carrying the first information, SIB 19 may further carry other information. Exemplarily, the fields in SIB 19 include, but are not limited to: EphemerisInfo, cellReferenceTrail (which may be used to carry the first information), epochTime, ntn-UlSyncValidityDuration, and distance Thresh.

The epochTime may be given by a system frame number (SFN) and a subframe number (SubFrameNR), where SFN is a system frame number of the base station, SubFrameNR is the subframe number, and both represent a start time of a downlink subframe and may be reused to indicate a reference moment of the NTN auxiliary information block. ntn-UlSyncValidityDuration refers to a duration for which the information in the NTN auxiliary information block remains reliable, which is determined based on a validity duration of all the information in the system information block and is not limited to a validity duration of the ephemeris information.

The following takes system information being SIB 19 as an example, an example of SIB 19 including the first information is provided, primarily for illustrative purposes to show NTN-related fields included in SIB 19.

```
-- ASN1START
-- TAG-SIB19-START

SIB19-r17 ::= SEQUENCE {
    ntn-Config-r17          NTN-Config-r17    OPTIONAL,    -- Need R

    cellReferenceTrail      CellReferenceTrail    OPTIONAL,    -- Need R
    t-Service-r17      INTEGER (0..549755813887)    OPTIONAL,    -- Need R
    referenceLocation-r17    ReferenceLocation-r17    OPTIONAL,    -- Need R
    distanceThresh-r17      INTEGER(0..65525)    OPTIONAL,    -- Need R
    ntn-NeighCellConfigList-r17    NTN-NeighCellConfigList-r17    OPTIONAL,    --
Need R
    lateNonCriticalExtension        OCTET STRING        OPTIONAL,
    ...,
    [[
    ntn-NeighCellConfigListExt-v1720  NTN-NeighCellConfigList-r17 OPTIONAL    --
Need R
    ]]
}

NTN-NeighCellConfigList-r17 ::=        SEQUENCE (SIZE(1..maxCellNTN-r17)) OF
NTN-NeighCellConfig-r17

NTN-NeighCellConfig-r17 ::=        SEQUENCE {
    ntn-Config-r17          NTN-Config-r17    OPTIONAL,    -- Need R
    carrierFreq-r17        ARFCN-ValueNR
    physCellId-r17          PhysCellId
}

-- TAG-SIB19-STOP
-- ASN1STOP
```

Information elements (IE) included in NTN-Config are shown below.

```
-- ASN1START
-- TAG-NTN-CONFIG-START


NTN-Config-r17 ::=          SEQUENCE {
    epochTime-r17    EpochTime-r17          OPTIONAL,    -- Need R
    ntn-UlSyncValidityDuration-r17 ENUMERATED{ s5, s10, s15, s20, s25, s30, s35,
s40, s45, s50, s55, s60, s120, s180, s240, s900}          OPTIONAL, -- Cond SIB19
    cellSpecificKoffset-r17    INTEGER(1..1023)     OPTIONAL, -- Need R
    kmac-r17        INTEGER(1..512)          OPTIONAL,   -- Need R
    ta-Info-r17        TA-Info-r17          OPTIONAL,   -- Need R
    ntn-PolarizationDL-r17    ENUMERATED {rhcp,lhcp,linear}   OPTIONAL, -- Need
R
    ntn-PolarizationUL-r17        ENUMERATED {rhcp,lhcp,linear}    OPTIONAL, --
Need R
    ephemerisInfo-r17        EphemerisInfo-r17     OPTIONAL, -- Need R
    ta-Report-r17        ENUMERATED {enabled}    OPTIONAL, -- Need R
    ...
}


EpochTime-r17 ::=          SEQUENCE {
    sfn-r17                INTEGER(0..1023),
    subFrameNR-r17            INTEGER(0..9)
}


TA-Info-r17 ::=          SEQUENCE {
    ta-Common-r17            INTEGER(0..66485757),
    ta-CommonDrift-r17    INTEGER(-257303..257303)   OPTIONAL, -- Need R
    ta-CommonDriftVariant-r17  INTEGER(0..28949)    OPTIONAL  -- Need R
}

-- TAG-NTN-CONFIG-STOP

-- ASN1STOP
```

The embodiments of the present disclosure add the field carrying the first information in system information (e.g., SIB 19), so that the terminal device can compute the time-varying reference position of the first cell with a lower computational burden. In some embodiments, the terminal device may also make the trigger decision of cell reselection based on the computed reference position of the first cell. Furthermore, a validity duration of the first information in the embodiments of the present disclosure is relatively long, which eliminates the need for high-frequency updates, effectively solving the cell reselection issue in the earth-moving cell scenario, such as NTN-NTN cell reselection and NTN-TN cell reselection, etc.

As described above, in some embodiments, the terminal device obtains the reference position of the first cell in order to trigger cell selection/reselection. The following takes the scenario where the terminal device obtains the reference position of the first cell in order to trigger the cell reselection as an example, the process after the terminal device receives the first information is described.

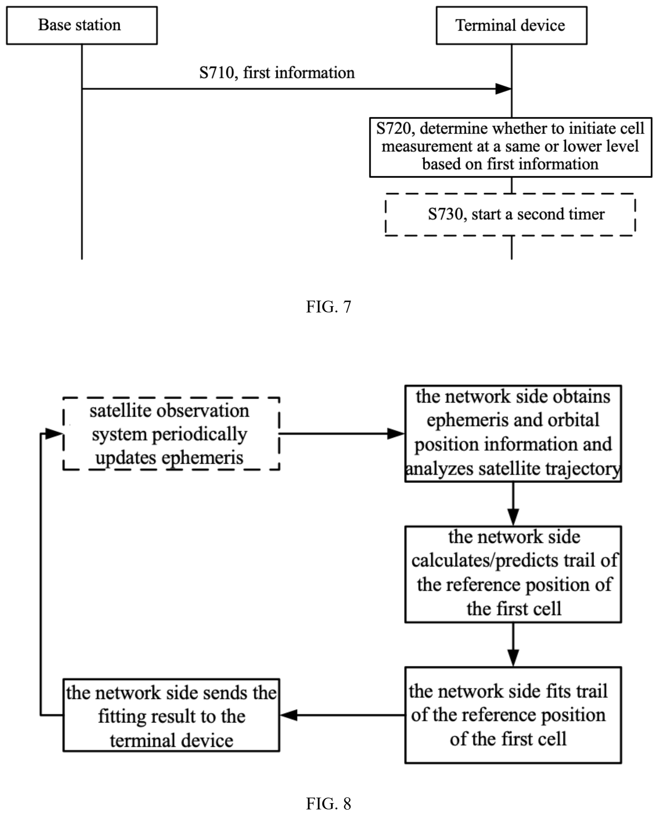

FIG. 7 is another schematic flowchart of a method for wireless communication provided in an embodiment of the present disclosure. The method shown in FIG. 7 includes operations S710 and S720.

At operation S710, the terminal device receives the first information.

For description regarding operation S710, refer to the previous description of operation S610 and the detailed description of the first information. For brevity, the details are not repeated here.

At operation S720, the terminal device determines whether to initiate cell measurement at a same level or a lower level based on the first information. In some embodiments, the cell measurement at the same level or a lower level is used for cell reselection.

In some embodiments, the initiating of the cell measurement is triggered based on time. For example, when the terminal device is stationary or moving at low speed (relative to the movement of the satellite, where low-speed movement of the terminal device may be regarded as a stationary state), the initiating of the cell measurement may be triggered based on the time.

In some embodiments, an initiating time for the cell measurement at the same or lower level (also referred to as the time for initiating the same or lower-level cell measurement) is determined based on the first information and a distance threshold for triggering cell reselection.

In some embodiments, if the time for initiating the cell measurement determined by the terminal device based on the first information does not arrive, the terminal device may not initiate the cell measurement at the same or lower level.

In some embodiments, if the time for initiating the cell measurement determined by the terminal device based on the first information arrives, the terminal device may initiate the cell measurement at the same or lower level.

In some embodiments, the time for initiating the cell measurement may be indicated via a first timer. As an implementation, the terminal device may determine the initiating time $t_{reselect}$ for cell reselection measurement based on the first information and the distance threshold for triggering cell reselection, define the current time as t0 (i.e., the time when $t_{reselect}$ is calculated), and initiate the first timer (e.g., timer T440) at time t0. A duration of the first timer is $t_{reselect}$ - t0. When the first timer expires, if the terminal device is in the idle or inactive state, it initiates the cell measurement at the same or lower level for cell reselection.

That is, in the embodiments of the present disclosure, the rule for initiating the measurement for cell reselection may include one or more of: (1) the terminal device sets the first timer based on the initiating time (e.g., $t_{reselect}$) for cell reselection measurement and the time when the initiating time for the cell reselection measurement is calculated (e.g., t0), the first timer being used to indicate the time for initiating cell measurement. (2) regardless of the situation, the terminal device always initiates the higher-level cell measurement. (3) if signal strength of a source cell on the terminal device side is below a threshold or the first timer has expired, the terminal device initiates the same or lower-level cell measurement.

Specifically, below is an example of a measurement initiation rule in which the initiating of the cell measurement is triggered based on the time.

- if the serving cell satisfies Srxlev>SIntraSearchPSrxlev and Squal>SIntraSearchQSqual:

  - if the distance threshold for triggering cell reselection and the first information are broadcast in SIB 19, and if the terminal device supports time-based measurement initiation and has obtained the position information of the terminal device:

    - if the first timer on the terminal device side has not expired, the terminal device may not perform the intra-frequency measurement;

otherwise, the terminal device will perform the intra-frequency measurement.
otherwise, the terminal device may not perform the intra-frequency measurement.
otherwise, the terminal device will perform the intra-frequency measurement. where Srxlev denotes a cell selection received signal level, SIntraSearchP denotes a Srxlev threshold for NR inter-frequency or inter-RAT frequency measurement, Squal denotes cell selection received signal quality, and SIntraSearchQ denotes a Squal threshold for the NR inter-frequency or inter-RAT frequency measurement.

In some embodiments, the s cell measurement at the same or lower level may include one or more of: inter-frequency cell measurement (e.g., NR inter-frequency measurement), inter-radio access technology (RAT) frequency measurement.

In some embodiments, the terminal device may apply the following measurement rules to NR inter-frequency and inter-RAT frequency indicated in system information and supported by the terminal device.

- for NR inter-frequency or inter-RAT frequency with reselection priority higher than reselection priority of the current NR frequency, the terminal device will perform the higher-priority NR inter-frequency or inter-RAT frequency measurement.
- for NR inter-frequency with reselection priority equal to or lower than reselection priority of the current NR frequency, and for inter-RAT frequency with reselection priority lower than reselection priority of the current NR frequency:
- if the serving cell satisfies Srxlev>SnonIntraSearchP and Squal>SnonIntraSearchQ:

  - if the distance threshold for triggering cell reselection and the first information are broadcast in SIB 19, and if the terminal device supports time-based measurement initiation and has obtained the position information of the terminal device:

- if the first timer on the terminal device side has not expired, the terminal device may choose not to perform equal or lower-priority NR inter-frequency or lower-priority inter-RAT frequency cell measurement;

- otherwise, the terminal device will perform NR equal or lower-priority inter-frequency cell measurement or lower-priority inter-RAT frequency cell measurement;

otherwise, the terminal device may choose not to perform equal or lower-priority NR inter-frequency or lower-priority inter-RAT frequency cell measurement;

otherwise, the terminal device will perform equal or lower-priority NR inter-frequency or lower-priority inter-RAT frequency cell measurement.

In the embodiments of the present disclosure, the terminal device is capable of obtaining trail information of reference positions of the first cell based on the first information, thereby obtaining a function of the distance between the terminal device and the first cell over time. Subsequently, the terminal device predicts the initiating time for the cell measurement at the same or lower level used for cell reselection through an iterative solution of a transcendental equation, transforming the cell reselection triggered by the distance threshold into the cell reselection triggered by time, thus simplifying the triggering process of cell reselection. Furthermore, the embodiments of the present disclosure utilize the first timer to determine the initiating time of the cell measurement, further simplifying the triggering process of cell reselection.

In some embodiments, the initiating of the cell measurement at the same or lower level is triggered based on the distance. For example, when the terminal device moves at high speed (relative to the movement of the satellite, high-speed movement of the terminal device may be regarded as mutual movement between the terminal device and the satellite), the initiating of the cell measurement may be triggered based on the distance.

As an implementation, the terminal device may parse (e.g., periodically parse) the current reference position of the first cell according to the first information and calculate the current distance between the terminal device and the reference position of the first cell based on the position information of the terminal device. If this distance exceeds the distance threshold for triggering cell reselection, and the terminal device is in an idle/inactive state, the terminal device initiates the cell measurement at the same or lower level for cell reselection.

It should be understood that the distance-triggered measurement initiation rule is similar to the time-triggered measurement initiation rule, but it requires modifying the method of using the first timer to determine whether the start time arrives to be based on whether the current distance between the terminal device and the reference position of the first cell exceeds the distance threshold for triggering cell reselection.

Continuing to refer to FIG. 7, in some embodiments, the method shown in FIG. 7 may further include operation S730. At operation S730, the terminal device starts a second timer, and the second timer is used to indicate a validity duration of the first information.

In some embodiments, if the system information carrying the first information (e.g., SIB 19) includes a plurality of fields, the validity duration indicated by the second timer is determined based on validity durations of all information within that system information, for example, may be the minimum value among the validity durations of all information in the system information.

In some embodiments, before or upon the expiration of the second timer, the terminal device needs to send a first request message to the network side to request new first information.

In some embodiments, the terminal device may start the second timer (e.g., timer T430) based on an epoch time and validity duration of an information block. In this case, a start time of the second timer is the epoch time indicated by the information block, and a duration of the second timer is the validity duration of the information block.

In some embodiments, the epoch time indicated by the information block is usually earlier than the current time. In this case, a time difference between the epoch time indicated by the information block and the current time may be calculated when setting the second timer.

In some embodiments, the epoch time and validity duration of the information block may be sent to the terminal device by the network side via system information. For example, the epoch time and validity duration of the information block may be carried in SIB 19.

In some embodiments, before or after the expiration of the second timer, after the terminal device sends the first request message to the network side, if the first information or ephemeris information differs from the last obtained information, the terminal device needs to re-determine whether to trigger the cell measurement for cell reselection; and if the first information and ephemeris information are the same as the last obtained information, the terminal device does not need to perform any other operations related to cell reselection.

As one implementation, assuming that the cell measurement is triggered based on the time, if the first information or ephemeris information differs from the last obtained information, the terminal device needs to parse the initiating time for the cell reselection measurement based on the new first information and the distance threshold for triggering cell reselection. In some embodiments, if there is a currently started first timer, the terminal device needs to terminate the first timer and start a new first timer based on the recalculated initiating time for the cell reselection measurement. When the new first timer expires, if the terminal device is in an idle/inactive state, the terminal device initiates the cell measurement at the same or lower level for cell reselection.

As another implementation, assuming that the cell measurement is triggered based on the distance, if the first information or ephemeris information differs from the last obtained information, the terminal device needs to parse (e.g., periodically parse) the reference position of the first cell based on the new first information (e.g., the time of receiving the new first information may be regarded as a starting point of the first time period). If the distance between the terminal device and the reference position of the first cell is greater than the distance threshold for triggering cell reselection, and the terminal device is in the idle/inactive state, the terminal device initiates the cell measurement at the same or lower level for cell reselection.

In some embodiments, if the terminal device periodically resolves the reference position of the first cell, a size of the resolution period may be reasonably set based on factors such as the size of the first cell and the movement speed of the satellite.

The embodiments of the present disclosure do not impose limitations on the execution order of operations S720 and S730. Exemplarily, operation S720 may be executed first, or operation S730 may be executed first, or operations S720 and S730 may executed simultaneously.

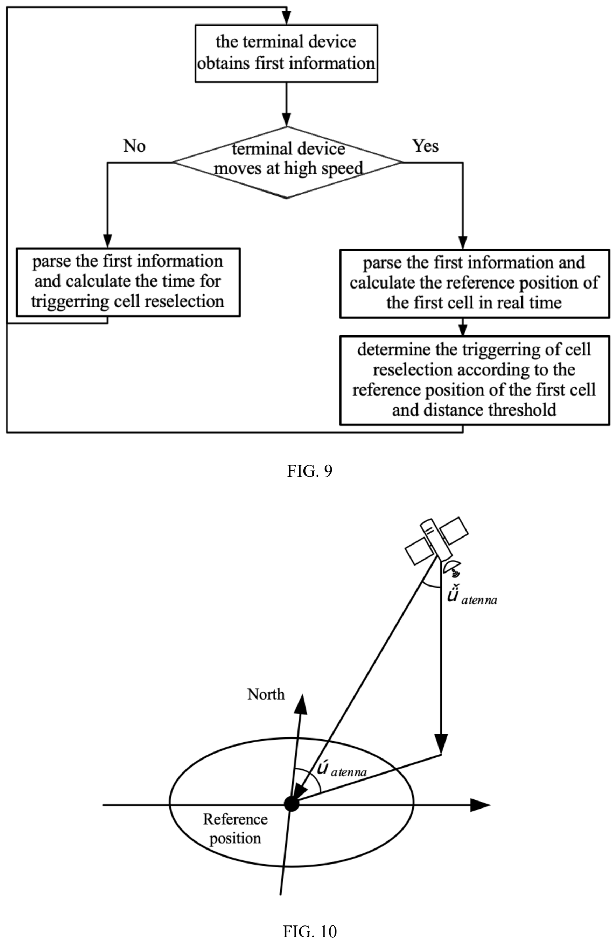

Based on the above introduction, the following provides an exemplary introduction to the overall processes on the network side (e.g., the base station) and the terminal device side in conjunction with FIG. 8 and FIG. 9.

FIG. 8 shows the overall process on the network side. The network side primarily completes one or more of the following processes: (1) analyzing the satellite's own trail; (2) calculating/predicting the trail of the reference positions of the first cell; (3) fitting the trail of the reference positions of the first cell; (4) sending the fitting result as the first information to the terminal device.

In some embodiments, the network side may omit the process of analyzing the satellite's own trail. For example, in the scenario where the reference position of the first cell is provided by the first device, the network side does not need to analyze the satellite's own trail.

In some embodiments, the network side may predict the trail of the reference positions of the first cell in a subsequent period (e.g., the first time period) based on discrete satellite position information in a period of time (e.g., the second time period) and the relative position relationship between the first cell and the satellite.

In some embodiments, the network side may possess one or more of the following capabilities to determine the first information.

Capability 1: the network side may be equipped with a corresponding satellite observation system, for example, the ground is equipped with a corresponding satellite observation system. The satellite observation system has basic capabilities for satellite observation and trail prediction.

In some embodiments, the observation and trail prediction results obtained by the satellite observation system may be sent to the NTN network device in the form of ephemeris.

In some embodiments, the ephemeris may include sufficient information for the network side to obtain the current satellite position as well as satellite positions in a subsequent period.

In some embodiments, the satellite observation system may update the ephemeris information at regular intervals to ensure the accuracy of the satellite position obtained by the network side.

For ease of understanding, Table 1 below exemplifies the content that the ephemeris information may include.

Table 1

| Parameter | Meaning |
|---|---|
| $t_{oe}$ | Ephemeris reference time |
| $M_0$ | Mean anomaly at the reference time |
| $e$ | Eccentricity |
| $\sqrt{A}$ | Square root of the semi-major axis |
| $I_0$ | Orbital inclination at the reference time |
| $\omega$ | Argument of perigee |

Capability 2: the network side may have the capability of knowing the current reference position of the first cell and predict the motion trail of the reference position of the first cell in a subsequent period.

Capability 3: if the network side predicts the reference position of the first cell based on the satellite's position information and the relative position relationship between the first cell and the satellite, the network side may have basic ephemeris parsing capabilities and be able to perform trail prediction based on the ephemeris.

In some embodiments, if the ephemeris information consists of classical satellite orbital parameters, the network side is able to predict the satellite position based on a simple celestial motion model (or through other means). In some embodiments, the network side may also be configured with ephemeris in other formats or other methods to obtain the satellite's position in a subsequent period and may also reuse satellite positions already calculated in other processes on the network side.

Figure 9 shows the overall process on the terminal device side. The process of the terminal device mainly includes obtaining the first information and determining whether to initiate the cell reselection measurement based on the first information.

In some embodiments, if the terminal device is in a stationary state or a low-speed moving state, the terminal device may calculate the time for initiating the cell measurement based on the first information and the distance threshold for cell reselection, so as to initiate the cell measurement at the same/low level when the time arrives.

In some embodiments, if the terminal device is in a high-speed moving state, the terminal device may calculate the reference position of the first cell based on the first information, and determine whether to trigger cell reselection (i.e., initiate the cell measurement at the same/low level) based on the reference position of the first cell and the distance threshold for cell reselection.

For ease of understanding, the following provides several specific embodiments taking the scenario of cell reselection as an example. It should be noted that the embodiments described below are for illustrative purposes only and do not limit the solutions of the embodiments of the present disclosure.

Embodiment 1: Network Side Determines the Reference Position of the First Cell Based on Ephemeris Information.

Embodiment 1 mainly describes primary processing flows on the network side and terminal device side using conventional ephemeris information based on orbital parameters, without reusing satellite positions calculated by other processes on the network side.

First, the primary processing flow on the network side is introduced.

1. The network side receives ephemeris information from the satellite observation system and performs satellite trajectory prediction.

The ephemeris information from the satellite observation system may be provided in the format of Table 2 (the ephemeris format shown in Table 2 refers to GPS broadcast ephemeris), and this ephemeris information may be provided periodically. After receiving the ephemeris information, the network side may predict the satellite trajectory in a period of time (a specific duration may be determined based on the type of satellite orbit, ephemeris accuracy, etc.) using a simple celestial motion model and correction terms in the ephemeris.

Table 2

| Satellite PRN Number, Year, Month, Day, Hour, Minute, Second, $a_{f0}$, $a_{f1}$, $a_{f2}$ |
|---|
| $aode$, $C_{rs}$, $\Delta n$, $M_0$ |
| $C_{uc}$, $e$, $C_{us}$, $\sqrt{A}$ |
| $t_{oe}$, $C_{ic}$, $\Omega_0$ $C_{is}$ |
| $i_0$, $C_{rc}$, $\omega$, $\dot{\Omega}$ |
| $\dot{i}$, $cf$ lg $l2$, $weekno$, $pf$ lg $l2$ |
| $svacc$, $svhlth$, $tgd$, $aodc$ |
| $ttm......$ |

The meanings of the parameters in Table 2 and their values may be referred to in Tables 3 and 4 respectively.

Table 3

| $a_{f0}$ - Satellite clock difference constant term, seconds; |
|---|
| $a_{f1}$ -Satellite clock difference drift term, seconds/seconds; |
| $a_{f2}$ - Satellite clock difference drift rate term, seconds/seconds$^2$; |
| $\Delta n$ - Long-term variation of mean anomaly (perigee parameter), radians/seconds; |

(continued)

| $M_0$ - Mean anomaly at reference time, radians; |
|---|
| $e$ - Eccentricity; |
| $\sqrt{A}$ - Square root of the semi-major axis, meters$^{1/2}$; |
| $\Omega_0$ - Right ascension of ascending node at reference time, radians; |
| $i_0$ - Orbital inclination at reference time, radians; |
| $\omega$ - Argument of perigee, radians; |
| $\dot{\Omega}$ - Long-term variation of right ascension of ascending node in the equatorial plane (mainly caused by a second-order zonal harmonic coefficient $C_{20}(J_2)$ of the Earth's gravitational field), radians/second; |
| $C_{uc}$ -Amplitude of cycle correction cosine term in the orbital trace direction at ephemeris reference time $t_{oe}$, radians; |
| $C_{us}$ -Amplitude of cycle correction sine term in the orbital trace direction at ephemeris reference time $t_{oe}$, radians; |
| $C_{rc}$ - Amplitude of cycle correction cosine term in the radial direction at ephemeris reference time $t_{oe}$, meters; |
| $C_{rs}$ - Amplitude of cycle correction sine term in the radial direction at ephemeris reference time $t_{oe}$, meters; |
| $C_{ic}$ - Amplitude of cycle correction cosine term at orbital inclination (approximately normal) at ephemeris reference time $t_{oe}$, radians; |
| $C_{is}$ - Amplitude of cycle correction sine term at orbital inclination (approximately normal) at ephemeris reference time $t_{oe}$, radians; |
| $t_{oe}$ - Ephemeris reference time (seconds of the week), seconds; |
| $aode$ - Age of data of ephemeris; |
| $\dot{i}$ - Rate of change of orbital inclination, radians/seconds; |
| $cf$ lg $l2$ - which code indicators are present on $l2$; |
| $weekno$ - GPS week number; |
| $pf$ lg $l2$ - P-code pseudorange indicator on $l2$; |
| $svacc$ - Broadcast ephemeris accuracy indicator, meters; |
| $svhlth$ - Satellite health indicator; |
| $tgd$ - Ionospheric group delay correction parameter, seconds; |
| $aodc$ - Age of data of the satellite clock; |
| $ttm$ - Time of information transmission (related to decoding of the satellite signal received by the receiver), seconds. |

Table 4

| Parameter | Value | Parameter | Value | Parameter | Value |
|---|---|---|---|---|---|
| Satellite PRN Number | 1 | $e$ | 0.012097717 | $\dot{\Omega}$ | -8.0964E-09 |
| Year, Month, Day, Hour, Minute, Second | 2022/12/9/0/0/0 | $C_{uc}$ | 2.16E-06 | $\dot{i}$ | -3.4144E-10 |
| $a_{f0}$ | 0.000240388 | $\sqrt{A}$ | 5153.655907 | $cf$ lg $l2$ | 1 |
| $a_{f1}$ | -5.34E-12 | $t_{oe}$ | 432000 | $weekno$ | 2239 |
| $a_{f2}$ | 0 | $C_{ic}$ | 1.51E-07 | $pf$ lg $l2$ | 0 |
| $aode$ | 58 | $\Omega_0$ | -0.88631756 | $svacc$ | 2 |
| $C_{rs}$ | -100.375 | $C_{is}$ | 3.00E-07 | $svhlth$ | 0 |
| $\Delta n$ | 4.02E-09 | $i_0$ | 0.989055043 | $tgd$ | 4.66E-09 |

(continued)

| Parameter | Value | Parameter | Value | Parameter | Value |
|---|---|---|---|---|---|
| $M_0$ | -1.000483662 | $C_{rc}$ | 350.59375 | aodc | 58 |
| $C_{uc}$ | -5.14E-06 | $\omega$ | 0.939169656 | ttm | 429999 |

Based on the above parameters, the following operations are used to predict the satellite's position within 20 minutes, resulting in the prediction of the satellite's position at 20 corresponding time points. It should be noted that if a more concise ephemeris from TR38.821 is used, calculations of the correction terms in the following operations are not necessary.

(1) Calculate the semi-major axis A

$$A = \left(\sqrt{A}\right)^2$$

(2) Calculate the angular velocity $n_0$

$$n_0 = \sqrt{\frac{GM}{A^3}}$$

where GM is the Earth's gravitational constant.
(3) Calculate the time difference $t_k$ from the time for predicting the satellite position to the reference time

$$t_k = t - t_{oe}$$

(4) Correct the mean angular velocity n

$$n = n_0 + \Delta n$$

(5) Calculate the mean anomaly $M_k$

$$M_k = M_0 + n \times t_k$$

(6) Iteratively calculate the eccentric anomaly $E_k$

$$M_k = M_0 + n \times t_k$$

(7) Calculate the true anomaly $v_k$

$$\begin{cases} cos\, v_k = \dfrac{(\cos E_k - e)}{1 - e \times \cos E_k} \\ \sin v_k = \dfrac{\sqrt{1 - e^2}\,\sin E_k}{1 - e \times \cos E_k} \end{cases}$$

Iteratively solve for the true anomaly $v_k$ (k = 1, 2, 3 ... ... 20) at 20 time points (e.g., with an interval of 60 seconds), where the time scale may still be the seconds within the GPS week.

(8) Calculate the latitude parameter $\emptyset_k$

$$\emptyset_k = v_k + \omega$$

(9) Cycle correction terms

$$\begin{cases} \delta u_k = C_{us} \sin(2\varphi_k) + C_{uc} \cos(2\varphi_k) \\ \delta r_k = C_{rs} \sin(2\varphi_k) + C_{rc} \cos(2\varphi_k) \\ \delta i_k = C_{is} \sin(2\varphi_k) + C_{ic} \cos(2\varphi_k) \end{cases}$$

(10) Calculate the corrected latitude parameter $u_k$

$$u_k = \varphi_k + \delta u_k$$

(11) Calculate the corrected radial distance radial distance $r_k$

$$r_k = A(1 - e \cos E_k) + \delta r_k$$

(12) Calculate the corrected inclination $i_k$

$$i_k = i_0 + \delta i_k + \dot{i} * t_k$$

(13) Calculate the satellite's coordinates in the orbital plane ( $x'_k \ y'_k$ )

$$\begin{cases} x'_k = r_k \cos(u_k) \\ y'_k = r_k \sin(u_k) \end{cases}$$

(14) Correct the longitude of the ascending node

$$\Omega_k = \Omega_0 + \left( \dot{\Omega} - \dot{\Omega}_e \right) t_k - \dot{\Omega}_e t_{oe}$$

where $\dot{\Omega}_e$ is the angular velocity of the Earth's rotation.

(15) Calculate the satellite's coordinates ($X_k \ Y_k \ Z_k$) in the Earth-fixed coordinate system

$$\begin{cases} X_k = x'_k \times \cos(\Omega_k) - y'_k \times \cos(i_k) \times \sin(\Omega_k) \\ Y_k = x'_k \times \sin(\Omega_k) - y'_k \times \cos(i_k) \times \cos(\Omega_k) \\ X_k = y'_k \times \sin(i_k) \end{cases}$$

2. The network side obtains the reference position of the first cell based on the satellite position and beam direction.

A schematic diagram of the relative position of the first cell to the satellite may be referenced in FIG. 10. As shown in FIG. 10, the Y-axis of the coordinate system points to true north, and the X-axis points to true east. The reference position of the first cell (corresponding to the center position of the first cell) is a point on the ground. The relative position of the first cell to the satellite may be represented by $\theta_{atenna}$ and $\gamma_{atenna}$, where $\theta_{atenna}$ is an angle between the line connecting the "reference position of the first cell and satellite" and the direction of the satellite perpendicular to the geocenter, and $\gamma_{atenna}$ is an angle between the line connecting the "sub-satellite point and reference position of the first cell" and the true north direction. In Embodiment 1, both $\theta_{atenna}$ and $\gamma_{atenna}$ are set to 0, thus the reference position of the first cell is the sub-satellite point of the satellite. Based on the satellite position ($X_k \ Y_k \ Z_k$), where k = 1, 2, 3, ..., 20, 20 reference positions ($Xc_k \ Yc_k \ Zc_k$) of the first cell are solved in the WGS84 coordinate system.

The reference positions of the first cell solved in Embodiment 1 have a low orbital eccentricity, close to a perfect circle, therefore, the variations of ($Xc_k \ Yc_k \ Zc_k$) over time are smooth, and the curve approaches a straight line. Based on this characteristic, when fitting 20 reference positions of the first cell using a polynomial fitting algorithm, a low-order Chebyshev polynomial (e.g., a 4th-order Chebyshev polynomial) may be used as the first model. Taking the fitting using the 4th-order Chebyshev polynomial as an example, the forms of each polynomial and their parameters are shown in Table 5.

Table 5

| Parameter | Corresponding Polynomial |
|---|---|
| $C_1(x), C_1(y), C_1(z)$ | $f_1(x) = 1$ |
| $C_2(x), C_2(y), C_2(z)$ | $f_2(x) = x$ |
| $C_3(x), C_3(y), C_3(z)$ | $f_3(x) = 2x^2 - 1$ |
| $C_4(x), C_4(y), C_4(z)$ | $f_4(x) = 4x^3 - 3x$ |
| $C_5(x), C_5(y), C_5(z)$ | $f_5(x) = 8x^4 - 8x^2 - 1$ |

The fitting results obtained using the 4th-order Chebyshev polynomial have errors in all three directions are below 0.1 meters, indicating a good fit and high accuracy of the position of the fitted first cell. It should be noted that in Embodiment 1, the reference time for parsing ephemeris is $t_{oe}$ (December 9, 2022, 8:00), so a time coordinate axis used for fitting is $t_{cell} = t - t_{oe}$ (where t is a time variable), and the unit thereof may be in minutes.

3. The network side determines the first information.

The first information, for example, may be carried in the cellReferenceTrail field of SIB 19. The format design of cellReferenceTrail may be as follows.

$$
\begin{aligned}
&\text{cellReferenceTrail ::=} && \text{SEQUENCE \{} \\
&\quad C_1(x) && \text{FLOAT,} \\
&\quad C_2(x) && \text{FLOAT,} \\
&\quad C_3(x) && \text{FLOAT,} \\
&\quad C_4(x) && \text{FLOAT,} \\
&\quad C_5(x) && \text{FLOAT,} \\
&\quad C_1(y) && \text{FLOAT,} \\
&\quad \cdots\cdots && \cdots\cdots, \\
&\quad C_5(z) && \text{FLOAT,} \\
&\text{\}}
\end{aligned}
$$

In Embodiment 1, the specific values of the above parameters may be referenced in Table 6.

Table 6

| Parameter | Value | Parameter | Value |
|---|---|---|---|
| $C_1(x)$ | 4751630.37391289 | $C_3(y)$ | 8531.65825469715 |
| $C_2(x)$ | 369182.808240253 | $C_4(y)$ | -128.935431682010 |
| $C_3(x)$ | -9091.44992343648 | $C_5(y)$ | -1.71469488421280 |
| $C_4(x)$ | -132.347465726343 | $C_1(z)$ | -101179.530759936 |
| $C_5(x)$ | 1.35939112868800 | $C_2(z)$ | -88880.7414150389 |
| $C_1(y)$ | -4234789.01061181 | $C_3(z)$ | 270.678246323272 |
| $C_2(y)$ | 416398.504857368 | $C_4(z)$ | 29.8376292397265 |

The following describes the primary process on the terminal device side.

1. The terminal device requests the first information from the network side.

Taking the first information carried in SIB 19 as an example, the terminal device may request SIB 19 from the network device and parse it to obtain information including but not limited to that in Table 7.

Table 7

| Information Name | Information Meaning |
|---|---|
| EphemerisInfo | Ephemeris information |

(continued)

| Information Name | Information Meaning |
|---|---|
| cellReferenceTrail | Cell reference trail parameters |
| epochTime | Epoch time |
| ntn-UlSyncValidityDuration | Information block validity duration |
| distanceThresh | Distance threshold of cell reselection |

2. Start the second timer.

Taking the second timer being Timer T430 as an example, the terminal device may start the validity timer T430 corresponding to SIB 19. As an implementation, the terminal device may set a timer that starts at the epoch time and lasts for the duration corresponding to the information block validity duration based on parameters, i.e., the epoch time and the information block validity duration.

3. Calculate the measurement initiation time of the cell reselection and set the first timer T440.

As an implementation, the terminal device may calculate the measurement initiation time of the cell reselection and set the first timer T440 through the following operations (1) to (5).

Operation (1): the terminal device converts the current time to GPS time.

In some implementations, the current time may first be converted to Julian Day, and then the Julian Day is converted to GPS time. Specifically, the Julian Day corresponding to the current time may be calculated using the following formula:   JulianDay=fix(365.25*(year))+fix(30.6001*(month+13))+day+(hour+min/60+second/3600)/   24+1720981.5. Then, the GPS time t corresponding to the current time may be calculated using the following formula: t=t2*604800, where t2=(JulianDay-2444244.5)/7-fix((JulianDay-2444244.5)/7). Finally, the GPS time corresponding to the current time after satellite clock difference correction (in minutes) may be calculated as: t=(t-(afc(1)+afc(2)*(t-$t_{oe}$)+ afc(3)*(t-$t_{oe}$)^2))/60.

Operation (2): obtain the reference position of the first cell.

The terminal device uses the GPS time t corresponding to the current time as a variable to obtain the trail of complete continuous reference positions of the first cell based on the first information, as shown in the following equations:

$$\begin{cases} Xc(t) = C_1(x)f_1(t - t_{oe}) + \cdots + C_5(x)f_1(t - t_{oe}) \\ Yc(t) = C_1(y)f_1(t - t_{oe}) + \cdots + C_5(y)f_1(t - t_{oe}) \\ Zc(t) = C_1(z)f_1(t - t_{oe}) + \cdots + C_5(z)f_1(t - t_{oe}) \end{cases}$$

Operation (3): calculate the measurement initiation time of the cell reselection.

As an implementation, the terminal device may solve the transcendental equation iteratively to calculate a possible initiation time for cell reselection $t_{reselect}$. In operation (1), the terminal device has already converted the current time t to Julian Day and GPS time, and set the time axis as $t_{cell} = t - t_{oe}$ (where t is the time variable, and this axis is consistent with the axis used for fitting on the network side) with the starting point $t_{oe}$

(December 9, 2022, 8:00) and the unit of minutes, to substitute into the first model to obtain the reference position of the cell center $Xc_k, Yc_k, Zc_k$.

The transcendental equation for the terminal device to solve $t_{reselect}$ is as follows:

$$(X_u - Xc(t_{reselect} - t_{oe}))^2 + (Y_u - Yc(t_{reselect} - t_{oe}))^2 + (Z_u - Zc(t_{reselect} - t_{oe}))^2 - d_{thresh}^2 = 0$$

where $X_u, Y_u, Z_u$ are coordinates of the terminal device in the ECEF coordinate system. In some embodiments, if the position of the terminal device is given in latitude and longitude format, the position may be converted to values of the ECEF rectangular coordinate system using the geodetic ellipsoid.

The embodiments of the present disclosure do not specifically limit the method for solving the above transcendental equation. For example, iterative algorithms (such as bisection method, Newton's method, optimization algorithms, etc.) may be used to find approximate solutions. For example, using Newton's method, the distance threshold $d_{thresh}$ for the cell reselection is set to 10 km, a specific value of $t_{reselect} - t_{oe}$ is calculated s 11.41 seconds. Therefore, after 11.41 seconds from 8:00 on December 9, 2022, the cell reselection measurement at the same or lower level may be considered. In some embodiments, after this value is calculated, the terminal device needs to set the first timer T440 based on the current time t0 and $t_{reselect}$, with the start time of T440 being t0 and the duration of T440 being $t_{reselect}-t_0$.

Operation (4): if the terminal device is in the idle/inactive state, the terminal device performs the measurement for cell reselection based on a condition.

In this embodiment, the terminal device always initiates the measurement for the higher-level cell regardless of the situation.

In this embodiment, if the signal strength of the source cell of the terminal device is below the threshold or the first timer T440 expires, the terminal device initiates the cell measurement at the same or lower level, detailed as follows.

- if the serving cell satisfies Srxlev>SnonIntraSearchP and Squal>SnonIntraSearchQ:

    - if distanceThresh and cellReferenceTrail are broadcasted in SIB19, and if the UE supports time-based measurement initiation and has obtained the position information of the terminal device:

        - if the first timer on the terminal device side has not expired, the terminal device may not to perform the intra-frequency measurement;

otherwise, the terminal device will perform the intra-frequency measurement;
otherwise, the terminal device may not perform the intra-frequency measurement;
otherwise, the terminal device will perform the intra-frequency measurement.

In some embodiments, the terminal device applies the following rules to NR inter-frequency and inter-RAT frequency indicated in the system information and supported by the UE:

- for NR inter-frequency or inter-RAT frequency with reselection priority higher than reselection priority of the current NR frequency, the terminal device will perform the measurement for the higher-priority NR inter-frequency or inter-RAT frequency.

- for NR inter-frequency with reselection priority equal to or lower than reselection priority of the current NR frequency, and for inter-RAT frequency with reselection priority lower than reselection priority of the current NR frequency:

    - if the serving cell satisfies Srxlev>SnonIntraSearchP and Squal>SnonIntraSearchQ:

        - if distance Thresh and cellReferenceTrail are broadcasted in SIB19, and if the terminal device supports time-based measurement initiation and has obtained the position information of the terminal device:

            - if the first timer on the terminal device side has not expired, the terminal device may choose not to perform the measurement for the equal or lower-priority NR inter-frequency cell or the lower-priority inter-RAT frequency cell;

        the - otherwise, the UE will perform the measurement for the same or lower-priority NR inter-frequency cell or the lower-priority inter-RAT frequency cell;
        otherwise, the UE may choose not to perform the measurement for the same or lower-priority NR inter-frequency cell or the lower-priority inter-RAT frequency cell;

otherwise, the UE will perform the measurement for the same or lower-priority NR inter-frequency cell or the lower-priority inter-RAT frequency cell .

Operation (5): the second timer is about to expire, return to execute operation (1).

When the second timer (e.g., Timer T430) is about to expire, the terminal device requests an update of the corresponding first information from the network side again and returns to execute operation (1).

Embodiment 2: Network Side Determines the Reference Position of the First Cell Using Other Methods

Embodiment 2 mainly describes primary processing flows on the network side and the terminal device side when the reference position of the first cell is not inferred from the ephemeris. It should be noted that the satellite orbit in Embodiment 2 is the same as that in Embodiment 1, and for brevity, it will not be reiterated here. Additionally, in Embodiment 2, the reference position of the first cell is located at a point off the satellite's sub-satellite point.

First, the primary processing flow on the network side is introduced.

1. The network side fits a curve of variation of the reference positions of the first cell over time.

The network side may utilize the reference position of the first cell provided by the first device to give 20 reference positions of the first cell in the WGS84 coordinate system ($Xc_k$ $Yc_k$ $Zc_k$). The reference position of the first cell solved in Embodiment 2 has a low orbital eccentricity, close to a perfect circle. Therefore, the changes in ($Xc_k$ $Yc_k$ $Zc_k$) over time are

smooth, and the curve approaches a straight line. Based on this characteristic, when using a polynomial fitting algorithm to fit these 20 reference positions of the first cell, a low-order Chebyshev polynomial (e.g., a 4th-order Chebyshev polynomial) may be used as the first model. Taking the fitting using the 4th-order Chebyshev polynomial as an example, the forms of each polynomial and their parameters are shown in Table 8.

Table 8

| Parameter | Corresponding Polynomial |
|---|---|
| $C_1(x), C_1(y), C_1(z)$ | $f_1(x) = 1$ |
| $C_2(x), C_2(y), C_2(z)$ | $f_2(x) = x$ |
| $C_3(x), C_3(y), C_3(z)$ | $f_3(x) = 2x^2 - 1$ |
| $C_4(x), C_4(y), C_4(z)$ | $f_4(x) = 4x^3 - 3x$ |
| $C_5(x), C_5(y), C_5(z)$ | $f_5(x) = 8x^4 - 8x^2 - 1$ |

The time coordinates used when the fitting results obtained using the 4th-order Chebyshev polynomial fit the coordinates in three directions is $t_{cell} = t - t_{oe}$, in the unit of minutes, with errors in all three directions below 0.05 meters. This indicates that when the beam is directed at a point off the sub-satellite point, the variation of the curve remains smooth, and this solution can still fit the trail well, allowing for the calculation of a high-precision reference position of the first cell (it should be noted that the above errors are only fitting errors, in practice, errors in the satellite trajectory obtained by the network side may also need to be considered).

In Embodiment 2, it is assumed that $t_{oe}$ is provided by the ephemeris. In some embodiments, if there is no ephemeris or other parameters indicating the reference time $t_{oe}$ for the fitting to the terminal device, it may be considered to reuse the epoch time field in SIB 19 to indicate $t_{oe}$.

2. The network side determines the first information.

The first information, for example, may be carried in the cellReferenceTrail field of SIB 19. The format design of cellReferenceTrail may be as follows:

```
cellReferenceTrail ::=          SEQUENCE {
        C₁(x)           FLOAT,
        C₂(x)           FLOAT,
      C₃(x)         FLOAT,
      C₄(x)         FLOAT,
      C₅(x)         FLOAT,
      C₁(y)         FLOAT,
      ……          ……,
      C₅(z)          FLOAT,

    }
```

In Embodiment 2, the specific values of the above parameters may be referenced in Table 9.

Table 9

| Parameter | Value | Parameter | Value |
|---|---|---|---|
| $C_1(x)$ | 4457054.63728615 | $C_3(y)$ | 10060.2864255706 |
| $C_2(x)$ | 299714.153425733 | $C_4(y)$ | 89.0254781732801 |
| $C_3(x)$ | -1617.91430213000 | $C_5(y)$ | -2.17203907575458 |
| $C_4(x)$ | -171.482158195344 | $C_1(z)$ | 3226653.37366624 |
| $C_5(x)$ | -0.830641874577850 | $C_2(z)$ | -309173.020649677 |
| $C_1(y)$ | -3199274.36421057 | $C_3(z)$ | -3010.59279102640 |
| $C_2(y)$ | 103859.130903638 | $C_4(z)$ | 92.6765232247417 |

The following describes the primary process on the terminal device side.

1. The terminal device requests the first information from the network side.

Taking the first information carried in SIB 19 as an example, the terminal device may request SIB 19 from the network device and parse it to obtain information including but not limited to that in Table 10.

Table 10

| Information Name | Information Meaning |
|---|---|
| EphemerisInfo | Ephemeris information |
| cellReferenceTrail | Cell reference trail parameters |
| epochTime | Epoch time |
| ntn-UlSyncValidityDuration | Information block validity duration |
| distanceThresh | Distance threshold of cell reselection |

2. Start the second timer.

Taking the second timer being Timer T430 as an example, the terminal device may start the validity timer T430 corresponding to SIB 19. As an implementation, the terminal device may set a timer that starts at the epoch time and lasts for the duration corresponding to the information block validity duration based on parameters, i.e., the epoch time and the information block validity duration.

3. Calculate the measurement initiation time of the cell reselection and set the first timer T440.

As an implementation, the terminal device may calculate the measurement initiation time of the cell reselection and set the first timer T440 through the following operations (1) to (5).

Operation (1): the terminal device converts the current time to Julian Day.

The Julian Day corresponding to the current time may be calculated using the following formula: JulianDay= (fix(365.25*(year))+fix(30.6001*(month+13))+day+(hour+ min/60+second/3600)/24+1720981.5)/60.

In some implementations, the current time may first be converted to Julian Day, and then the Julian Day may be converted to GPS time. The specific method may refer to Embodiment 1 and will not be reiterated here. It should be noted that in Embodiment 1, the terminal device may also convert the current time to Julian Day without converting it to GPS time.

Operation (2): obtain the reference position of the first cell.

The terminal device takes $t_{oe}$ as a reference start time and obtains the trail of the complete continuous reference positions of the first cell as shown in the following equations:

$$\begin{cases} Xc(t) = C_1(x)f_1(t - t_{oe}) + \cdots + C_5(x)f_1(t - t_{oe}) \\ Yc(t) = C_1(y)f_1(t - t_{oe}) + \cdots + C_5(y)f_1(t - t_{oe}) \\ Zc(t) = C_1(z)f_1(t - t_{oe}) + \cdots + C_5(z)f_1(t - t_{oe}) \end{cases}$$

Operation (3): calculate the measurement initiation time of the cell reselection.

As an implementation, the terminal device may solve the transcendental equation iteratively to calculate a possible initiation time for cell reselection $t_{reselect}$. In operation (1), the terminal device has already converted the current time t to Julian Day and sets the time axis t with the starting point $t_{oe}$ (December 9, 2022, 8:00) and the unit of minutes, to substitute into the first model to obtain the reference position of the cell center $Xc_k$, $Yc_k$, $Zc_k$.

The transcendental equation for the terminal device to solve $t_{reselect}$ is as follows:

$$(X_u - Xc(t_{reselect} - t_{oe}))^2 + (Y_u - Yc(t_{reselect} - t_{oe}))^2 + (Z_u - Zc(t_{reselect} - t_{oe}))^2 - d_{thresh}^{\ 2} = 0$$

where $X_u$, $Y_u$, $Z_u$ are coordinates of the terminal device in the ECEF coordinate system. In some embodiments, if the position of the terminal device is given in latitude and longitude format, the position may be converted to values of the ECEF rectangular coordinate system using the geodetic ellipsoid.

The embodiments of the present disclosure do not specifically limit the method for solving the above transcendental equation. For example, iterative algorithms (such as bisection method, Newton's method, optimization algorithms, etc.) may be used to find approximate solutions. For example, using Newton's method, the distance threshold $d_{thresh}$ for the cell reselection is set to 10 km, a specific value of $t_{reselect}$ - $t_{oe}$ is calculated s 12.37 seconds. Therefore, after 12.37 seconds from 8:00 on December 9, 2022, the cell reselection measurement at the same or lower level may be considered.

In some embodiments, after this value is calculated, the terminal device needs to set the first timer T440 based on the current time t0 and $t_{reselect}$, with the start time of T440 being t0 and the duration of T440 being $t_{reselect}$-$t_0$.

Operation (4): if the terminal device is in the idle/inactive state, the terminal device performs the measurement for cell reselection based on a condition.

In this embodiment, the terminal device always initiates the measurement for the higher-level cell regardless of the situation.

In this embodiment, if the signal strength of the source cell of the terminal device is below the threshold or the first timer T440 expires, the terminal device initiates the cell measurement at the same or lower level, detailed as follows.

- if the serving cell satisfies Srxlev>SnonIntraSearchP and Squal>SnonIntraSearchQ:

  - if distanceThresh and cellReferenceTrail are broadcasted in SIB19, and if the UE supports time-based measurement initiation and has obtained the position information of the terminal device:

    - if the first timer on the terminal device side has not expired, the terminal device may not to perform the intra-frequency measurement;

otherwise, the terminal device will perform the intra-frequency measurement;
otherwise, the terminal device may not perform the intra-frequency measurement;
otherwise, the terminal device will perform the intra-frequency measurement.
In some embodiments, the terminal device applies the following rules to NR inter-frequency and inter-RAT frequency indicated in the system information and supported by the UE:

- for NR inter-frequency or inter-RAT frequency with reselection priority higher than reselection priority of the current NR frequency, the terminal device will perform the measurement for the higher-priority NR inter-frequency or inter-RAT frequency.

- for NR inter-frequency with reselection priority equal to or lower than reselection priority of the current NR frequency, and for inter-RAT frequency with reselection priority lower than reselection priority of the current NR frequency:

  - if the serving cell satisfies Srxlev>SnonIntraSearchP and Squal>SnonIntraSearchQ:

    - if distance Thresh and cellReferenceTrail are broadcasted in SIB19, and if the terminal device supports time-based measurement initiation and has obtained the position information of the terminal device:

      - if the first timer on the terminal device side has not expired, the terminal device may choose not to perform the measurement for the equal or lower-priority NR inter-frequency cell or the lower-priority inter-RAT frequency cell;

the - otherwise, the UE will perform the measurement for the same or lower-priority NR inter-frequency cell or the lower-priority inter-RAT frequency cell;
otherwise, the UE may choose not to perform the measurement for the same or lower-priority NR inter-frequency cell or the lower-priority inter-RAT frequency cell;
otherwise, the UE will perform the measurement for the same or lower-priority NR inter-frequency cell or the lower-priority inter-RAT frequency cell .

Operation (5): the second timer is about to expire, return to execute operation (1).

When the second timer (e.g., Timer T430) is about to expire, the terminal device requests an update of the corresponding first information from the network side again and returns to execute operation (1).

Embodiment 3: Determine a Reference Position of a LEO Dynamic Cell

Embodiment 1 and Embodiment 2 primarily focus on GEO satellites, while Embodiment 3 is mainly concerned with LEO satellites. Embodiment 3 introduces primary processing flows on the network side and the terminal device side when the beam of the LEO satellite undergoes dynamic changes. It should be noted that the satellite orbit in Embodiment 3 is the same as that in Embodiment 1, and for brevity, it will not be reiterated here. Additionally, since some operations in Embodiment 3 are the same as those in Embodiment 1 or Embodiment 2, the parts not detailed in Embodiment 3 may refer to the previous descriptions in Embodiment 1 or Embodiment 2.

First, the primary processing flow on the network side is introduced.

### 1. The network side obtains the satellite trajectory

In this embodiment, the ephemeris information of the satellite observation system may be provided in any format. The network side may directly obtain the satellite trajectory or calculate the satellite's position at any time points over a period based on the ephemeris information. The network side predicts the satellite positions corresponding to the next 20 time points (e.g., with an interval of 15 seconds). The currently used time standard may be either Julian Day or GPS time. Similar to Embodiment 1 or Embodiment 2, the starting time for the 20 time points is $t_{oe}$, which may be provided by the ephemeris or other means.

2. The network side fits a curve of variation of the reference positions of the first cell over time.

Referring back to FIG. 10, the direction of the beam corresponding to the first cell may be represented by $\theta_{atenna}$ and $\gamma_{atenna}$. In this embodiment, values of $\theta_{atenna}$ and $\gamma_{atenna}$ are time-varying functions, denoted as $\theta_{atenna}(t)$ and $\gamma_{atenna}(t)$, respectively. The network side may calculate 20 reference positions ($Xc_k\ Yc_k\ Zc_k$) of the first cell in the WGS84 coordinate system based on the satellite position and $\theta_{atenna}(t)$, $\gamma_{atenna}(t)$. In some implementations, these 20 reference positions of the first cell are derived from the satellite position by the network side. In other implementations, these 20 reference positions of the first cell are directly provided by the first device.

In Embodiment 3, a polynomial fitting algorithm may still be used to fit the 20 reference positions of the first cell. For example, a 5th-order Chebyshev polynomial may be used as the first model. Taking the fitting using the 5th-order Chebyshev polynomial as an example, the forms of the polynomials and their parameters are shown in Table 11.

Table 11

| Parameter | Corresponding Polynomial |
|---|---|
| $C_1(x), C_1(y), C_1(z)$ | $f_1(x) = 1$ |
| $C_2(x), C_2(y), C_2(z)$ | $f_2(x) = x$ |
| $C_3(x), C_3(y), C_3(z)$ | $f_3(x) = 2x^2 - 1$ |
| $C_4(x), C_4(y), C_4(z)$ | $f_4(x) = 4x^3 - 3x$ |
| $C_5(x), C_5(y), C_5(z)$ | $f_5(x) = 8x^4 - 8x^2 - 1$ |
| $C_6(x), C_6(y), C_6(z)$ | $f_6(x) = 16x^5 - 20x^3 + x$ |

In Embodiment 3, the specific values of the above parameters may refer to Table 12.

Table 12

| Parameter | Value | Parameter | Value |
|---|---|---|---|
| $C_1(x)$ | 514450.688610083 | $C_4(y)$ | 35.9650283523370 |
| $C_2(x)$ | 558933.441817952 | $C_5(y)$ | 15.2704338297481 |
| $C_3(x)$ | 1701.86715065699 | $C_6(y)$ | 1.54584304301534 |
| $C_4(x)$ | 847.013450282232 | $C_1(z)$ | 2094765.15651701 |
| $C_5(x)$ | 6.38733603194851 | $C_2(z)$ | 856398.734098664 |
| $C_6(x)$ | 0.741406195468699 | $C_3(z)$ | 13970.1599836240 |
| $C_1(y)$ | 5950618.39324547 | $C_4(z)$ | 976.900756319927 |
| $C_2(y)$ | 352211.009317425 | $C_5(z)$ | 15.4387847680773 |
| $C_3(y)$ | 44441.5557929280 | $C_6(z)$ | 0.966707977073384 |

The time coordinates used when the fitting results obtained using the 5th-order Chebyshev polynomial fit the coordinates in three directions is $t_{cell} = t - t_{oe}$, in the unit of minutes, with errors in all three directions below 0.1 meters. This indicates that when the beam direction changes dynamically, the embodiments of the present disclosure can still fit the trail of the reference positions of the first cell, allowing the terminal device to calculate a high-precision reference position of the first cell (it should be noted that the above errors are only fitting errors, in practice, errors in the satellite trajectory obtained by the network side may also need to be considered).

In Embodiment 3, the subsequent primary flow on the terminal device side is the same as that in Embodiment 1 or Embodiment 2, and for brevity, it will not be reiterated here.

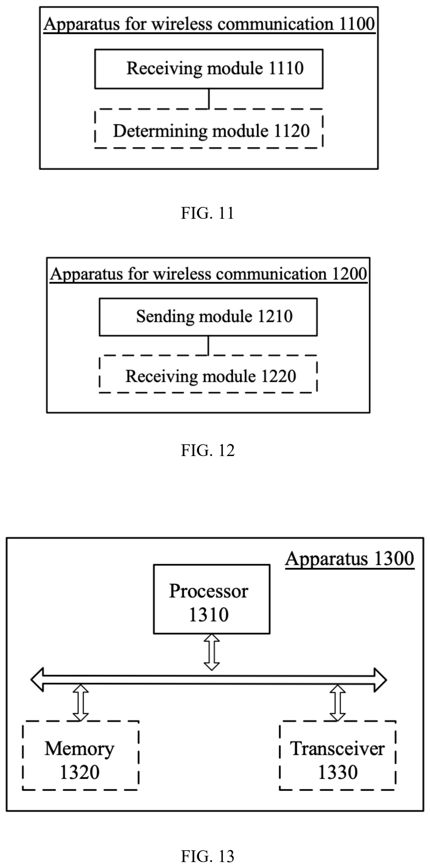

The method embodiments of the present disclosure are described in detail above with reference to FIG. 1 to FIG. 10, and the apparatus embodiments of the present disclosure are described in detail below with reference to FIG. 11 to FIG. 13. It should be understood that descriptions of the method embodiments correspond to descriptions of the apparatus embodiments, and therefore, reference may be made to the foregoing method embodiments for parts that are not described in detail.

FIG. 11 is a schematic structural diagram of an apparatus for wireless communication according to an embodiment of the present disclosure. The apparatus for wireless communication 1100 shown in FIG. 11 may be a terminal device, and the apparatus for wireless communication 1100 includes a receiving module 1110.

The receiving module 1110 may be configured to receive first information, where the first information is used to indicate continuous reference positions of a first cell in a first time period, and a coverage area of the first cell changes with movement of a satellite.

Optionally, the first information includes first parameters, and the first parameters are used to determine trail information of reference positions of the first cell.

Optionally, the first information is obtained by estimating a plurality of reference positions of the first cell in a second time period.

Optionally, the plurality of reference positions of the first cell in the second time period are obtained according to one or more of: information of a plurality of positions of the satellite in the second time period; a relative position relationship between the first cell and the satellite; and the plurality of reference positions of the first cell in the second time period provided by the first device.

Optionally, the first information is estimated by a base station.

Optionally, updating of the first information is triggered based on a condition, and the condition for triggering the updating of the first information includes one or more of: updating of a ephemeris; a relative position relationship between the first cell and the satellite changing; and a reference position of the first cell changing.

Optionally, after the terminal device receives the first information, the apparatus for wireless communication 1100 further includes: a determining module 1120, configured to determine whether to initiate a cell measurement at a same level or a low level based on the first information, where the cell measurement at the same level or the low level is used for cell reselection.

Optionally, the initiating of the cell measurement is triggered based on time.

Optionally, the time for initiating the cell measurement is determined based on the first information and a distance threshold for triggering the cell reselection.

Optionally, the determining, by the terminal device, initiate the cell measurement at the same level or the low level based on the first information includes: the terminal device not initiating the cell measurement at the same level or the low level if the time for initiating the cell measurement determined by the terminal device based on the first information does not arrive; and/or the terminal device initiating the cell measurement at the same level or the low level if the time for initiating the cell measurement determined by the terminal device based on the first information arrives.

Optionally, the time for initiating the cell measurement is indicated via a first timer.

Optionally, the initiating of the cell measurement is triggered based on a distance.

Optionally, the apparatus 1100 for wireless communication further includes: a starting module, configured to start a second timer, where the second timer is used to indicate a validity duration of the first information.

Optionally, the apparatus 1100 for wireless communication further includes: a sending module, configured to send a first request message, where the first request message is used to obtain the first information.

Optionally, the first information is carried in system information.

Optionally, the receiving module 1110 may be a transceiver 1330, and the apparatus 1100 for wireless communication may further include a processor 1310 and a memory 1320, as shown in FIG. 13.

FIG. 12 is another schematic structural diagram of an apparatus for wireless communication according to an embodiment of the present disclosure. The apparatus 1200 for wireless communication shown in FIG. 12 may be a base station, and the apparatus 1200 for wireless communication includes a sending module 1210.

The sending module 1210 may be configured to send first information, where the first information is used to indicate continuous reference positions of a first cell in a first time period, and a coverage area of the first cell changes with movement of a satellite.

Optionally, the first information includes first parameters, and the first parameters are used to determine trail information of reference positions of the first cell.

Optionally, the first information is obtained by estimating a plurality of reference positions of the first cell in a second time period.

Optionally, the plurality of reference positions of the first cell in the second time period are obtained according to one or more of: information of a plurality of positions of the satellite in the second time period; a relative position relationship between the first cell and the satellite; and the plurality of reference positions of the first cell in the second time period provided by the first device.

Optionally, the first information is estimated by the base station.

Optionally, updating of the first information is triggered based on a condition, and the condition for triggering the updating of the first information includes one or more of: updating of a ephemeris; a relative position relationship between the first cell and the satellite changing; and a reference position of the first cell changing.

Optionally, the first information is used by a terminal device to determine whether to whether to initiate a cell measurement at a same level or a low level, where the cell measurement at the same level or the low level is used for cell reselection.

Optionally, the initiating of the cell measurement is triggered based on time.

Optionally, the time for initiating the cell measurement is determined according to the first information and a distance threshold for triggering the cell reselection.

Optionally, the time for initiating the cell measurement is indicated via a first timer.

Optionally, the initiating of the cell measurement is triggered based on a distance.

Optionally, the apparatus 1200 for wireless communication further includes: a receiving module 1220, configured to receive a first request message, where the first request message is used to obtain the first information.

Optionally, the first information is carried in system information.

Optionally, the sending module 1210 may be a transceiver 1330. The base station 1200 may further include a processor 1310 and a memory 1320, as shown in FIG. 13.

FIG. 13 is a schematic structural diagram of an apparatus for communication according to an embodiment of the present disclosure. The dashed line in FIG. 13 indicates that the unit or module is optional. The apparatus 1300 may be configured to implement the method described in the foregoing method embodiments. The apparatus 1300 may be a chip, a terminal device, or a network device.

The apparatus 1300 may include one or more processors 1310, and the processor 1310 may support the apparatus 1300 to implement the method described in the foregoing method embodiments. The processor 1310 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1300 may further include one or more memories 1320 storing a program, and the program may be executed by the processor 1310 to cause the processor 1310 to perform the method described in the foregoing method embodiments. The memory 1320 may be independent of the processor 1310 or may be integrated into the processor 1310.

The apparatus 1300 may further include a transceiver 1330, and the processor 1310 may communicate with another device or chip via the transceiver 1330. For example, the processor 1310 may perform data transceiving with another device or chip via the transceiver 1330.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" in the present disclosure may be used interchangeably. In addition, the terms used in the present disclosure are merely used to explain specific embodiments of the present disclosure and are not intended to limit the present disclosure. In the description, claims, and accompanying drawings of the present disclosure, the terms "first", "second", "third", "fourth", and the like are used to distinguish different objects rather than describe a specific order. In addition, the terms "including" and "having" and any variations thereof are intended to cover non-exclusive inclusion.

The term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" means that B is associated with A and B may be determined by A. However, it should also be understood that determining B based on A does not mean determining B only based on A, but that B may also be determined based on A and/or other information.

In the embodiments of the present disclosure, the term "corresponding" may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" or "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communication system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present disclosure, a size of a serial number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for wireless communication, comprising:
   receiving, by a terminal device, first information, wherein the first information is used to indicate continuous reference positions of a first cell in a first time period, and a coverage area of the first cell changes with movement of a satellite.

2. The method according to claim 1, wherein the first information includes first parameters, and the first parameters are used to determine trail information of reference positions of the first cell.

3. The method according to claim 1 or claim 2, wherein the first information is obtained by estimating a plurality of reference positions of the first cell in a second time period.

4. The method according to claim 3, wherein the plurality of reference positions of the first cell in the second time period are obtained according to one or more of:

   information of a plurality of positions of the satellite in the second time period;
   a relative position relationship between the first cell and the satellite; and
   the plurality of reference positions of the first cell in the second time period provided by the first device.

5. The method according to any one of claims 1 to 4, wherein the first information is estimated by a base station.

6. The method according to any one of claims 1 to 5, wherein updating of the first information is triggered based on a condition, and the condition for triggering the updating of the first information includes one or more of:

   updating of a ephemeris;
   a relative position relationship between the first cell and the satellite changing; and
   a reference position of the first cell changing.

7. The method according to any one of claims 1 to 6, wherein after the terminal device receives the first information, the method further includes:
   determining, by the terminal device, whether to initiate a cell measurement at a same level or a low level based on the first information, wherein the cell measurement at the same level or the low level is used for cell reselection.

8. The method according to claim 7, wherein the initiating of the cell measurement is triggered based on time.

9. The method according to claim 8, wherein the time for initiating the cell measurement is determined according to the first information and a distance threshold for triggering the cell reselection.

10. The method according to claim 8 or claim 9, wherein the determining, by the terminal device, whether to initiate the cell measurement at the same level or the low level based on the first information includes:

    the terminal device not initiating the cell measurement at the same level or the low level if the time for initiating the cell measurement determined by the terminal device based on the first information does not arrive; and/or
    the terminal device initiating the cell measurement at the same level or the low level if the time for initiating the cell measurement determined by the terminal device based on the first information arrives.

11. The method according to any one of claims 8 to 10, wherein the time for initiating the cell measurement is indicated via a first timer.

12. The method according to claim 7, wherein the initiating of the cell measurement is triggered based on a distance.

13. The method according to any one of claims 1 to 12, wherein after the terminal device receives the first information, the method further includes:
    starting, by the terminal device, a second timer, wherein the second timer is used to indicate a validity duration of the first information.

14. The method according to any one of claims 1 to 13, further comprising:
    sending, by the terminal device, a first request message, wherein the first request message is used to obtain the first information.

15. The method according to any one of claims 1 to 14, wherein the first information is carried in system information.

16. A method for wireless communication, comprising:
sending, by a base station, first information, wherein the first information is used to indicate continuous reference positions of a first cell in a first time period, and a coverage area of the first cell changes with movement of a satellite.

17. The method according to claim 16, wherein the first information includes first parameters, and the first parameters are used to determine trail information of reference positions of the first cell.

18. The method according to claim 16 or claim 17, wherein the first information is obtained by estimating a plurality of reference positions of the first cell in a second time period.

19. The method according to claim 18, wherein the plurality of reference positions of the first cell in the second time period are obtained according to one or more of:

information of a plurality of positions of the satellite in the second time period;
a relative position relationship between the first cell and the satellite; and
the plurality of reference positions of the first cell in the second time period provided by the first device.

20. The method according to any one of claims 16 to 19, wherein the first information is estimated by the base station.

21. The method according to any one of claims 16 to 20, wherein updating of the first information is triggered based on a condition, and the condition for triggering the updating of the first information includes one or more of:

updating of a ephemeris;
a relative position relationship between the first cell and the satellite changing; and
a reference position of the first cell changing.

22. The method according to any one of claims 16 to 21, wherein the first information is used by a terminal device to determine whether to initiate a cell measurement at a same level or a low level, wherein the cell measurement at the same level or the low level is used for cell reselection.

23. The method according to claim 22, wherein the initiating of the cell measurement is triggered based on time.

24. The method according to claim 23, wherein the time for initiating the cell measurement is determined according to the first information and a distance threshold for triggering the cell reselection.

25. The method according to claim 23 or claim 24, wherein the time for initiating the cell measurement is indicated via a first timer.

26. The method according to claim 22, wherein the initiating of the cell measurement is triggered based on a distance.

27. The method according to any one of claims 16 to 26, further comprising:
receiving, by the base station, a first request message, wherein the first request message is used to obtain the first information.

28. The method according to any one of claims 16 to 27, wherein the first information is carried in system information.

29. An apparatus for wireless communication, wherein the apparatus is a terminal device, comprising:
a receiving module, configured to receive first information, wherein the first information is used to indicate continuous reference positions of a first cell in a first time period, and a coverage area of the first cell changes with movement of a satellite.

30. The apparatus according to claim 29, wherein the first information includes first parameters, and the first parameters are used to determine trail information of reference positions of the first cell.

EP 4 686 261 A1

31. The apparatus according to claim 29 or claim 30, wherein the first information is obtained by estimating a plurality of reference positions of the first cell in a second time period.

32. The apparatus according to claim 30, wherein the plurality of reference positions of the first cell in the second time period are obtained according to one or more of:

information of a plurality of positions of the satellite in the second time period;
a relative position relationship between the first cell and the satellite; and
the plurality of reference positions of the first cell in the second time period provided by the first device.

33. The apparatus according to any one of claims 29 to 32, wherein the first information is estimated by a base station.

34. The apparatus according to any one of claims 29 to 33, wherein updating of the first information is triggered based on a condition, and the condition for triggering the updating of the first information includes one or more of:

updating of a ephemeris;
a relative position relationship between the first cell and the satellite changing; and
a reference position of the first cell changing.

35. The apparatus according to any one of claims 29 to 34, further comprising:
a determining module, configured to determine whether to initiate a cell measurement at a same level or a low level based on the first information, wherein the cell measurement at the same level or the low level is used for cell reselection.

36. The apparatus according to claim 35, wherein the initiating of the cell measurement is triggered based on time.

37. The apparatus according to claim 36, wherein the time for initiating the cell measurement is determined according to the first information and a distance threshold for triggering the cell reselection.

38. The apparatus according to claim 36 or claim 37, wherein the determining, by the terminal device, whether to initiate the cell measurement at the same level or the low level based on the first information includes:

the terminal device not initiating the cell measurement at the same level or the low level if the time for initiating the cell measurement determined by the terminal device based on the first information does not arrive; and/or
the terminal device initiating the cell measurement at the same level or the low level if the time for initiating the cell measurement determined by the terminal device based on the first information arrives.

39. The apparatus according to any one of claims 36 to 38, wherein the time for initiating the cell measurement is indicated via a first timer.

40. The apparatus according to claim 35, wherein the initiating of the cell measurement is triggered based on a distance.

41. The apparatus according to any one of claims 29 to 40, further comprising:
a starting module, configured to start a second timer, wherein the second timer is used to indicate a validity duration of the first information.

42. The apparatus according to any one of claims 29 to 41, further comprising:
a sending module, configured to send a first request message, wherein the first request message is used to obtain the first information.

43. The apparatus according to any one of claims 29 to 42, wherein the first information is carried in system information.

44. An apparatus for wireless communication, wherein the apparatus is a base station, comprising:
a sending module, configured to send first information, wherein the first information is used to indicate continuous reference positions of a first cell in a first time period, and a coverage area of the first cell changes with movement of a satellite.

45. The apparatus according to claim 44, wherein the first information includes first parameters, and the first parameters

34

are used to determine trail information of reference positions of the first cell.

46. The apparatus according to claim 44 or claim 45, wherein the first information is obtained by estimating a plurality of reference positions of the first cell in a second time period.

47. The apparatus according to claim 46, wherein the plurality of reference positions of the first cell in the second time period are obtained according to one or more of:

information of a plurality of positions of the satellite in the second time period;
a relative position relationship between the first cell and the satellite; and
the plurality of reference positions of the first cell in the second time period provided by the first device.

48. The apparatus according to any one of claims 44 to 47, wherein the first information is estimated by the base station.

49. The apparatus according to any one of claims 44 to 48, wherein updating of the first information is triggered based on a condition, and the condition for triggering the updating of the first information includes one or more of:

updating of a ephemeris;
a relative position relationship between the first cell and the satellite changing; and
a reference position of the first cell changing.

50. The apparatus according to any one of claims 44 to 49, wherein the first information is used by a terminal device to determine whether to initiate a cell measurement at a same level or a low level, wherein the cell measurement at the same level or the low level is used for cell reselection.

51. The apparatus according to claim 50, wherein the initiating of the cell measurement is triggered based on time.

52. The apparatus according to claim 51, wherein the time for initiating the cell measurement is determined according to the first information and a distance threshold for triggering the cell reselection.

53. The apparatus according to claim 51 or claim 52, wherein the time for initiating the cell measurement is indicated via a first timer.

54. The apparatus according to claim 50, wherein the initiating of the cell measurement is triggered based on a distance.

55. The apparatus according to any one of claims 44 to 54, further comprising:
a receiving module, configured to receive a first request message, wherein the first request message is used to obtain the first information.

56. The apparatus according to any one of claims 44 to 55, wherein the first information is carried in system information.

57. An apparatus for wireless communication, wherein the apparatus is a terminal device, comprising: a transceiver, a memory, and a processor, wherein the memory is configured to store a program, and the processor is configured to invoke the program in the memory to cause the apparatus to perform the method according to any one of claims 1 to 15.

58. An apparatus for wireless communication, wherein the apparatus is a base station, comprising: a transceiver, a memory, and a processor, wherein the memory is configured to store a program, and the processor is configured to invoke the program in the memory to cause the apparatus to perform the method according to any one of claims 16 to 28.

59. An apparatus, comprising a processor, wherein the processor is configured to invoke a program from a memory to cause the apparatus to perform the method according to any one of claims 1 to 28.

60. A chip, comprising a processor, wherein the processor is configured to invoke a program from a memory to cause a device on which the chip is installed to perform the method according to any one of claims 1 to 28.

61. A computer-readable storage medium storing a program, wherein the program causes a computer to perform the method according to any one of claims 1 to 28.

62. A computer program product comprising a program, wherein the program causes a computer to perform the method according to any one of claims 1 to 28.

63. A computer program, wherein the computer program causes a computer to perform the method according to any one of claims 1 to 28.

**100**

110

120          120

FIG. 1A

1102

1101

FIG. 1B

FIG. 1C

FIG. 2

FIG. 3

EP 4 686 261 A1

FIG. 4

FIG. 5

FIG. 6

Base station

Terminal device

S710, first information

S720, determine whether to initiate cell measurement at a same or lower level based on first information

S730, start a second timer

FIG. 7

satellite observation system periodically updates ephemeris

the network side obtains ephemeris and orbital position information and analyzes satellite trajectory

the network side calculates/predicts trail of the reference position of the first cell

the network side sends the fitting result to the terminal device

the network side fits trail of the reference position of the first cell

FIG. 8

FIG. 9

FIG. 10

Apparatus for wireless communication 1100

Receiving module 1110

Determining module 1120

FIG. 11

Apparatus for wireless communication 1200

Sending module 1210

Receiving module 1220

FIG. 12

Apparatus 1300

Processor 1310

Memory 1320

Transceiver 1330

FIG. 13

## INTERNATIONAL SEARCH REPORT

| International application No. |
|---|
| **PCT/CN2023/083339** |

| A. | CLASSIFICATION OF SUBJECT MATTER |
|---|---|

H04W 36/16(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, DWPI, CNABS, VEN, ENTXTC: 小区, 连续, 时间段, 参考, 位置, 卫星, 覆盖范围, 移动, 改变, 测量, 计时器, 定时器, cell, continuous, time quantum, reference, change, location, satellite, coverage area, move, motion, timer, measure

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115767658 A (CHINA ACADEMY OF INFORMATION AND COMMUNICATIONS TECHNOLOGY) 07 March 2023 (2023-03-07) description, paragraphs 69-145 | 1-63 |
| A | CN 115701783 A (BEIJING XIAOMI MOBILE SOFTWARE CO., LTD.) 10 February 2023 (2023-02-10) entire document | 1-63 |
| A | CN 111800830 A (HUAWEI TECHNOLOGIES CO., LTD.) 20 October 2020 (2020-10-20) entire document | 1-63 |
| A | US 2016092588 A1 (LI, Chian Chiu) 31 March 2016 (2016-03-31) entire document | 1-63 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 October 2023** | **24 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083339**

| Patent document cited in search report | | | Publication date (day/month/year) | Patent family member(s) | | | Publication date (day/month/year) |
|---|---|---|---|---|---|---|---|
| CN | 115767658 | A | 07 March 2023 | None | | | |
| CN | 115701783 | A | 10 February 2023 | WO | 2022252160 | A1 | 08 December 2022 |
| CN | 111800830 | A | 20 October 2020 | None | | | |
| US | 2016092588 | A1 | 31 March 2016 | US | 2018107753 | A1 | 19 April 2018 |
| | | | | US | 2016071127 | A1 | 10 March 2016 |

Form PCT/ISA/210 (patent family annex) (July 2022)